# EUROPÄISCHE PATENTSCHRIFT

(11) **EP 4 047 219 B1**
(45) Veröffentlichungstag und Bekanntmachung des Hinweises auf die Patenterteilung: **14.06.2023**
(21) Anmeldenummer: 21213997.6
(22) Anmeldetag: 13.12.2021
(51) Int. Cl.: F16B 2/10, F16B 37/04, F16B 2/12, F16B 7/22, F16B 7/04

(54) **MONTAGE-EINHEIT MIT ZUMINDEST EINER MONTAGESCHIENE SOWIE WENIGSTENS EINER HALTEKLAMMER**
ASSEMBLY UNIT WITH AT LEAST ONE MOUNTING RAIL AND AT LEAST ONE RETAINING CLIP
UNITÉ DE MONTAGE POURVU D'AU MOINS UN RAIL DE MONTAGE, AINSI QU'AU MOINS UN CLIP DE RETENUE

(30) Priorität: 19.02.2021 DE 102021103968
(43) Veröffentlichungstag der Anmeldung: 24.08.2022
(73) Patentinhaber: Sikla Holding GmbH, 4614 Marchtrenk (AT)
(72) Erfinder: Maute, Mario, 78628 Rottweil (DE)
(74) Vertreter: Mertzlufft-Paufler, Cornelius

(56) Entgegenhaltungen:
- EP-A1- 0 166 794
- DE-A1- 2 239 370
- DE-A1-102009 000 702

## Beschreibung

Die Erfindung betrifft eine Montage-Einheit mit zumindest einer Montageschiene, an der wenigstens eine Halteklammer lösbar fixierbar ist, die zwei Klammerteile hat, welche mittels einer Spanneinrichtung derart gegeneinander verspannbar sind, dass die Klammerteile in einer Halteposition die Montageschiene zumindest in einem Teilbereich zwischen sich einspannen. Aus der DE 10 2009 000702 A1 sind die Merkmale des Oberbegriffes von Anspruch 1 bekannt.

Aus der DE 201 03 811 U1 ist eine Montage-Einheit der eingangs erwähnten Art vorbekannt, die zumindest eine Montageschiene aufweist, welche eine beidseits von Schienen-Längswänden begrenzte Schienen-Öffnung hat. An der zumindest einen Montageschiene ist wenigstens eine Halteklammer lösbar befestigbar, die zwei Klammerteile aufweist, von denen ein erstes Klammerteil als Halteklaue ausgebildet ist, die eine Grundplatte hat, an deren Längsrändern in Halteposition quer zur Schienen-Längsrichtung orientierte Längswände vorstehen, welche dieses erste Klammerteil in der Halteposition gegen ein Verdrehen sichern. Die Halteklammer hat ein zweites Klammerteil, das im Schienen-Innenraum der Montageschiene angeordnet ist. Dabei sind die beiden Klammerteile der wenigstens einen Halteklammer mittels einer Spanneinrichtung derart gegeneinander verspannbar, dass diese Klammerteile in der Halteposition die Montageschiene beidseits an den die Schienen-Öffnung begrenzenden Längsrändern zwischen sich einspannen. Diese Spanneinrichtung weist einen Gewindestab auf, der mit dem zweiten Klammerteil verbunden ist und eine Durchstecköffnung des ersten Klammerteils durchsetzt. Auf das erste Klammerteil ist eine Gewindemutter aufgeschraubt, die gegen das erste Klammerteil verspannbar ist.

Für das Aufschrauben und Festziehen der Gewindemutter auf dem Gewindestab ist ein erheblicher Platzbedarf erforderlich, um ein geeignetes Werkzeug an der Gewindemutter anziehen und drehen zu können. Dabei erfordert das Festziehen und Lösen der Gewindemutter am Gewindestab einen erheblichen Montage- und Demontageaufwand, insbesondere wenn die Gewindemutter mit einem festgelegten Anziehmoment in der Halteposition festgezogen werden soll.

Es besteht daher insbesondere die Aufgabe, eine Montage-Einheit der eingangs erwähnten Art zu schaffen, die auch unter beengten Platzverhältnissen möglichst einfach handhabbar ist und die dennoch mit einem vergleichsweise geringen Aufwand hergestellt werden kann.

Die erfindungsgemäße Lösung dieser Aufgabe nach Anspruch 1 umfasst bei der Montage-Einheit der eingangs erwähnten Art die Merkmale, dass die Spanneinrichtung einen Spannzapfen hat, der an einem ersten Klammerteil vorsteht und eine Duchtrittsöffnung an einem zweiten Klammerteil durchsetzt, dass die Spanneinrichtung ein hülsenförmiges Spannelement zur Druckbeaufschlagung des zweiten Klammerteiles hat, das mit seinem Hülseninnenraum am Spannzapfen drehbar gelagert ist und wenigstens eine Führungsbahn mit kurven- oder spiralförmigen Bahnverlauf hat, in der mindestens ein zugeordneter und am Spannzapfen gehaltener Zapfenbart oder Spannnocken derart geführt ist, dass eine relative Drehbewegung zwischen Spannelement und Spannzapfen in eine Längsbewegung des Spannelements am Spannzapfen umgesetzt wird.

Die erfindungsgemäße Montage-Einheit, die beispielsweise in der Gebäudetechnik zur Konstruktion von Vorwandinstallationen oder im Anlagenbau zur Befestigung von Versorgungsleitungen verwendet werden kann, weist zumindest eine Montageschiene auf, an der wenigstens eine Halteklammer fixierbar ist. Die wenigstens eine Halteklammer hat zwei Klammerteile, welche mittels einer Spanneinrichtung derart gegeneinander verspannbar sind, dass die Klammerteile in einer Halteposition die Montageschiene zumindest in einem Teilbereich zwischen sich einspannen. Diese Spanneinrichtung weist einen Spannzapfen auf, der an einem ersten Klammerteil der wenigstens einen Halteklammer vorsteht und eine Durchtrittsöffnung am zweiten Klammerteil durchsetzt. Die Spanneinrichtung weist darüber hinaus auch ein hülsenförmiges Spannelement auf, das zur Druckbeaufschlagung des zweiten Klammerteils in der Halteposition dient. Dieses hülsenförmige Spannelement ist mit seinem Hülseninnenraum am oder auf dem Spannzapfen drehbar gelagert und hat wenigstens eine Führungsbahn mit kurven- oder spiralförmigem Bahnverlauf, in der mindestens ein zugeordneter und am Spannzapfen gehaltener Zapfenbart oder mindestens eine zugeordnete und am Spannzapfen gehaltene Spannnocke derart geführt ist, dass eine relative Drehbewegung zwischen Spannelement und Spannzapfen in eine Längsbewegung des Spannelements am Spannzapfen umgesetzt wird. Die Führungsbahn kann eine Steigung aufweisen, derart, dass auch durch eine Drehbewegung weniger als 180° und insbesondere gleich oder weniger als 90° das Spannelement zwischen seiner Offenposition und seiner Spann- oder Halteposition bewegbar ist. Durch diese vergleichsweise geringe Relativverdrehung von Spannzapfen und Spannelement wird eine einfache Handhabung der erfindungsgemäßen Montage-Einheit auch unter beengten Platzverhältnissen begünstigt. Da die Führungsbahn die Position des Spannelements am Spannzapfen auch in der Spann-oder Haltestellung festlegt, lässt sich der von der Spanneinrichtung in der Halteposition erzeugte Anpressdruck auf einen definierten Wert festlegen.

Um die Handhabung der erfindungsgemäßen Montage-Einheit noch zusätzlich zu erleichtern, ist es vorteilhaft und ausreichend, wenn der mindestens eine Zapfenbart oder Spannnocken auf der Führungsbahn zwischen einer Offenposition und einer Spann-oder Haltestellung bewegbar ist.

Fehlbedienungen der an der wenigstens einen Halteklammer der erfindungsgemäßen Montageeinheit vorgesehenen Spanneinrichtung lassen sich vermeiden, wenn der Führungsweg des mindestens einen Zapfenbarts oder Spannnockens auf der Führungsbahn durch zumindest einen Führungsanschlag und vorzugsweise beidseits durch jeweils einen Führungsanschlag begrenzt ist. Ist die Führungsbahn am hülsenförmigen Spannelement insbesondere beidseits durch jeweils einen Führungsanschlag begrenzt, werden Fehlbedienungen der an der wenigstens einen Halteklammer vorgesehenen Spanneinrichtung vermieden.

Damit sich der mindestens eine, auf der Führungsbahn geführte Zapfenbart oder Spannnocken nicht unbeabsichtigt aus der Spann- oder Halteposition lösen kann, ist es vorteilhaft, wenn in der Führungsbahn eine Einsenkung vorgesehen ist, in welcher Einsenkung der mindestens eine Zapfenbart oder mindestens eine Spannnocken in der Spannstellung einrastet.

Eine weiterbildende Ausführungsform gemäß der Erfindung sieht vor, dass die wenigstens eine Halteklammer zwei Klammerteile hat, die jeweils mindestens eine, einen benachbarten Schienen-Längsrand der eine Schienen-Längsseite begrenzenden Schienen-Längsränder hintergreifende Klammerkralle aufweisen, und von denen ein, den einen Schienen-Längsrand hintergreifendes erstes Klammerteil wenigstens eine, von mindestens einer Auflaufschräge begrenzte Ausformung und ein, den anderen Schienen-Längsrand hintergreifendes zweites Klammerteil zumindest eine, von wenigstens einer Gegenschräge begrenzte Einformung oder Aussparung tragen, und dass die Ausformung einerseits und die Einformung oder Aussparung andererseits der aneinander anliegenden Klammerteile in der Spann- oder Halteposition der Halteklammer formschlüssig aufeinander positioniert sind. Bei dieser weiterbildenden Ausführungsform lässt sich auch durch geringfügiges Verdrehen des hülsenförmigen Spannelements auf dem Spannzapfen bereits ein ausreichendes axiales Verspannen der die Montageschiene bereichsweise zwischen sich einspannenden Klammerteile erreichen. Da die an dem ersten Klammerteil vorgesehene und von mindestens einer Auflaufschräge begrenzte Ausformung einerseits und die am zweiten Klammerteil angeordnete und von wenigstens einer Gegenschräge begrenzte Einformung oder Aussparung andererseits mit zunehmendem Anpressdruck der Spanneinrichtung formschlüssig ineinandergreifen, wird auf die Klammerteile auch eine quer zum Spannzapfen wirkende Kraft ausgeübt, welche die Klammerteile derart zueinander zieht, dass die an den Klammerteilen vorgesehenen Klammer-Krallen die Montageschiene fest zwischen sich einspannen. In der Halte-oder Spannposition greifen die an den Klammerteilen vorgesehenen Geometrien, nämlich die Ausformung einerseits und die Einformung oder Aussparung andererseits, derart formschlüssig ineinander, dass diese Klammerteile eine festgelegte Relativposition zueinander einnehmen und gegen ein Verdrehen gesichert sind.

Um eine formschlüssige Verbindung der an den Klammerteilen vorgesehenen Geometrien zu erreichen, kann die Ausformung einerseits und die Einformung oder Aussparung andererseits auch einen kreisrunden Querschnitt aufweisen. Eine bevorzugte Ausführungsform gemäß der Erfindung, die eine definierte Relativposition der Klammerteile in der Spann- oder Halteposition begünstigt, sieht demgegenüber vor, dass die Ausformung einerseits und die Einformung oder Aussparung andererseits jeweils einen quadratischen oder rautenförmigen Querschnitt aufweisen.

Dabei wird eine Ausführungsform gemäß der Erfindung bevorzugt, bei der die Diagonalen des quadratischen oder rautenförmigen Querschnitts der Ausformung und der Einformung oder Aussparung in Schienen-Längsrichtung beziehungsweise rechtwinklig zur Schienen-Längsrichtung orientiert sind.

Ein fester Halt der wenigstens einen Halteklammer an der zumindest einen Montageschiene wird begünstigt, wenn an dem, in Halteposition an der zumindest einen Schienen-Längsseite anliegenden ersten Klammerteil die Ausformung vorgesehen ist, die in die dem zweiten Klammerteil zugewandte Richtung vorsteht.

In einem Ausführungsbeispiel ist vorgesehen, dass die am ersten Klammerteil vorgesehene Ausformung in eine am zweiten Klammerteil angeordnete Aussparung eingreift, welche Aussparung als Sackloch oder als das zweite Klammerteil durchdringendes Loch ausgebildet sein kann. Bevorzugt wird jedoch eine Ausführungsform, bei der die am ersten Klammerteil vorgesehene Ausformung und die am zweiten Klammerteil vorgesehene Einformung jeweils als vorzugsweise formgleiche Ausprägungen dieser Klammerteile ausgebildet sind. Da somit auch die am zweiten Klammerteil vorgesehene Einformung als Ausprägung des zweiten Klammerteiles ausgebildet ist, wird durch diese Einformung des zweiten Klammerteiles auch eine sacklochartige Einformung am zweiten Klammerteil gebildet, in welche die am ersten Klammerteil vorgesehene Ausformung formschlüssig einschnappen kann.

Die Montageschiene kann auch leistenförmig ausgebildet sein, damit die wenigstens eine Halteklammer an der vorder- oder rückseitigen Schienen-Längsseite der Montageschiene befestigt werden kann. Bevorzugt wird jedoch eine Ausführung, bei der die Montageschiene im Schienen-Querschnitt eine rechteckige und vorzugsweise eine quadratische Außen-Querschnittskontur aufweist.

Dabei sieht eine bevorzugte Weiterbildung gemäß der Erfindung vor, die einen festen und belastbaren Halt der wenigstens einen Halteklammer an der zumindest einen Montageschiene begünstigt, dass die Montageschiene in jedem ihrer Eckbereiche eine Nut aufweist, deren Nutöffnung durch die, an den jeweiligen Schienen-Eckbereich angrenzenden Schienen-Längsränder begrenzt ist.

Dabei ist es vorteilhaft, wenn die in den Schienen-Eckbereichen angeordneten Nuten als Schwalbenschwanz-Nuten ausgebildet sind.

Die wenigstens eine Halteklammer der erfindungsgemäßen Montage-Einheit lässt sich in einer Vormontageposition bereits an der Montageschiene befestigen, ohne dass die Spanneinrichtung festgezogen werden müsste, wenn die Klammerteile der Halteklammer durch zumindest ein Federelement in ungespanntem Zustand der Spanneinrichtung auseinandergedrückt werden.

Dabei sieht eine mögliche Ausführungsform gemäß der Erfindung vor, dass das zumindest eine Federelement als Federbügel ausgebildet ist, der vorzugsweise mit dem ersten Klammerteil verbunden sein kann.

Ist das zumindest eine Federelement als Federbügel ausgebildet, kann es vorteilhaft sein, wenn das zumindest eine Federelement das zweite Klammerteil an dessen der mindestens einen Klammerkralle abgewandten Querrandbereich federnd beaufschlagt, so dass die Klammerteile beim Aufschnappen auf die Montageschiene von der Offenposition in die Vormontage-oder Halteposition bewegt werden.

Eine bevorzugte Weiterbildung gemäß der Erfindung sieht jedoch vor, dass das zumindest eine Federelement als multigewellte Federscheibe ausgebildet ist.

Ist das zumindest eine Federelement als multigewellte Federscheibe ausgebildet, kann es vorteilhaft sein, wenn die zumindest eine Federscheibe eine Scheibenöffnung hat, die der Spannzapfen durchsetzt und/oder die zwischen dem ersten und dem zweiten Klammerteil angeordnet ist.

Eine einfache und vorteilhafte Ausführungsform gemäß der Erfindung sieht vor, dass der mindestens eine Zapfenbart am Zapfenumfang des Spannzapfens vorzugsweise radial vorsteht.

Weist das hülsenförmige Spannelement eine Führungsbahn auf, die auch zum Hülsenaußenumfang des Spannelements hin offen ausgebildet ist, lässt sich der zumindest eine Zapfenbart durch die Führungsbahn hindurch auch nachträglich noch am Spannelement montieren. Die einfache Herstellung der an der wenigstens einen Halteklammer vorgesehenen Spanneinrichtung wird jedoch begünstigt, wenn am Hülseninnenumfang des Spannelements wenigstens eine in der Führungsbahn mündende Nut vorgesehen ist zum Einfädeln des zumindest einen Zapfens in die Führungsbahn. Insbesondere auch in diesem Ausführungsbeispiel ist zwischen dem Spannzapfen und dem Spannelement der Spanneinrichtung eine bajonettverschlussartige Verbindung vorgesehen.

Steht am Spannzapfen zumindest ein Zapfenbart vorzugsweise radial vor und ist dieser zumindest eine Spannzapfen durch eine in Längsrichtung orientierte Nut am Hülseninnenumfang des Spannelements einfädelbar, kann es vorteilhaft sein, wenn der oben erwähnte Absatz/zumindest einer der oben erwähnten Absätze zwischen der Nut und der Führungsbahn vorgesehen ist.

Eine bevorzugte Weiterbildung gemäß der Erfindung sieht demgegenüber vor, dass der zumindest eine Spannnocken sich am Spannzapfen in axialer Richtung zu der ihm zugeordneten Führungsbahn hin erstreckt.

Damit das hülsenförmige Spannelement die wenigstens eine Führungsbahn aufweisen kann, ist es vorteilhaft, wenn das hülsenförmige Spannelement einen Ringabsatz oder eine Hülsenstirnfläche hat, welcher Ringabsatz oder welche Hülsenstirnfläche die wenigstens eine Führungsbahn trägt.

Weist das Spannelement an seinem Hülseninnenumfang den Ringabsatz auf, kann es vorteilhaft sein, wenn der Ringabsatz den Hülseninnenraum des Spannelements in einen Abschnitt reduzierten Querschnitts und einem demgegenüber im Querschnitt erweiterten Abschnitt unterteilt.

Damit der wenigstens eine, am Spannzapfen gehaltene Spannnocken die ihm zugeordnete und am Spannelement vorgesehene Führungsbahn auch mit einem hohen Anpressdruck druckbeaufschlagen kann, ist es vorteilhaft, wenn der Spannzapfen an seinem dem ersten Klammerteil abgewandten Zapfenende einen Zapfenkopf hat, der den zumindest einen Spannnocken trägt.

Der zumindest eine Spannnocken wird in der Spann- oder Halteposition sicher und fest gegen die zugeordnete und am Spannelement vorgesehene Führungsbahn gepresst, wenn am Zapfenkopf die zumindest eine Spannnocke sich in axialer Richtung hin zum Spannelement erstreckt.

Eine besonders vorteilhafte Weiterbildung gemäß der Erfindung, die eine sichere Drehführung beim Relativverdrehen zwischen Spannzapfen und Spannelement begünstigt, sieht vor, dass der Zapfenkopf zumindest in einem den Klammerteilen zugewandten Teilbereich seines Außenumfangs durch eine zylindrische Hülle umgrenzt ist.

Dabei ist es vorteilhaft, wenn der Zapfenkopf mit seinem den Klammerteilen zugewandten Teilbereich in den querschnittserweiterten Abschnitt des Hülseninnenraums vorsteht und/oder wenn die den Außenumfang des den Klammerteilen zugewandten Teilbereichs des Zapfenkopfes umgrenzende Hülle einerseits und das Spannelement in seinem querschnittserweiterten Abschnitt seines Hülseninnenraums andererseits während des Relativverdrehens von Spannelement und Spannzapfen ineinander geführt sind.

Weiterbildungen gemäß der Erfindung ergeben sich aus der nachfolgenden Beschreibung eines bevorzugten Ausführungsbeispieles in Verbindung mit den Ansprüchen sowie der Zeichnung. Nachstehend wird die Erfindung anhand eines bevorzugten Ausführungsbeispieles noch näher beschrieben.

Es zeigt:
- Fig. 1: eine hier aus einer Montageschiene und einer daran montierten Halteklammer bestehende Montage-Einheit in einer perspektivischen Darstellung, wobei die Halteklammer hier aus zwei Klammerteilen besteht, die zwischen der hier gezeigten Relativposition und einer Spann- oder Halteposition quer zur Schienen-Längsrichtung verschiebbar und verschwenkbar sind, und die mittels einer Spanneinrichtung in der Spann- oder Halteposition derart aneinander fixiert werden können, dass diese Klammerteile einen Teilbereich der Montageschiene zwischen sich einspannen,
- Fig. 2: die aus den beiden Klammerteilen bestehende Halteklammer der in Figur 1 gezeigten Montage-Einheit mit der zwischen den Klammerteilen wirkenden Spanneinrichtung in einer Seitenansicht,
- Fig. 3: die Halteklammer aus Figur 2 in einer perspektivischen Draufsicht,
- Fig. 4: die Halteklammer aus den Figuren 2 und 3 in einer Seitenansicht in der in Figur 2 und 3 gezeigten Relativposition eines Spannzapfens sowie eines Spannelements der Spanneinrichtung, wobei am Spannzapfen ein Zapfenbart radial vorsteht,
- Fig. 5: die Halteklammer aus den Figuren 1 bis 4 unmittelbar vor dem Verrasten der Spanneinrichtung in ihrer Spann- oder Halteposition,
- Fig. 6: die Halteklammer aus den Figuren 1 bis 5 in einer Perspektivdarstellung mit Blick auf die in ihrer Halte- oder Spannposition eingerasteten Spanneinrichtung,
- Fig. 7: das erste Klammerteil der in den Figuren 1 bis 6 gezeigten Halteklammer mit Blick auf die einem zweiten Klammerteil zugewandte Flachseite,
- Fig. 8: den am ersten Klammerteil lösbar befestigbaren Spannzapfen der in den Figuren 1 bis 7 gezeigten Halteklammer, an welchem Spannzapfen umfangsseitig der Zapfenbart vorzugsweise radial vorsteht,
- Fig. 9: das erste Klammerteil der in den Figuren 1 bis 8 gezeigten Halteklammer, wobei der Spannzapfen eine Halteöffnung im ersten Klammerteil durchsetzt und über dessen, dem zweiten Klammerteil zugewandte Flachseite vorsteht,
- Fig. 10: das zweite Klammerteil der in den Figuren 1 bis 6 gezeigten Halteklammer, das eine zentrale schlüssellochartige Durchtrittsöffnung für den Spannzapfen aufweist,
- Fig. 11: das zweite Klammerteil aus Figur 10 in einer Unteransicht auf die dem ersten Klammerteil zugewandte Flachseite,
- Fig. 12: das hülsenförmige Spannelement der an der Halteklammer gemäß den Figuren 1 bis 6 gezeigten Spanneinrichtung in einer perspektivischen Seitenansicht,

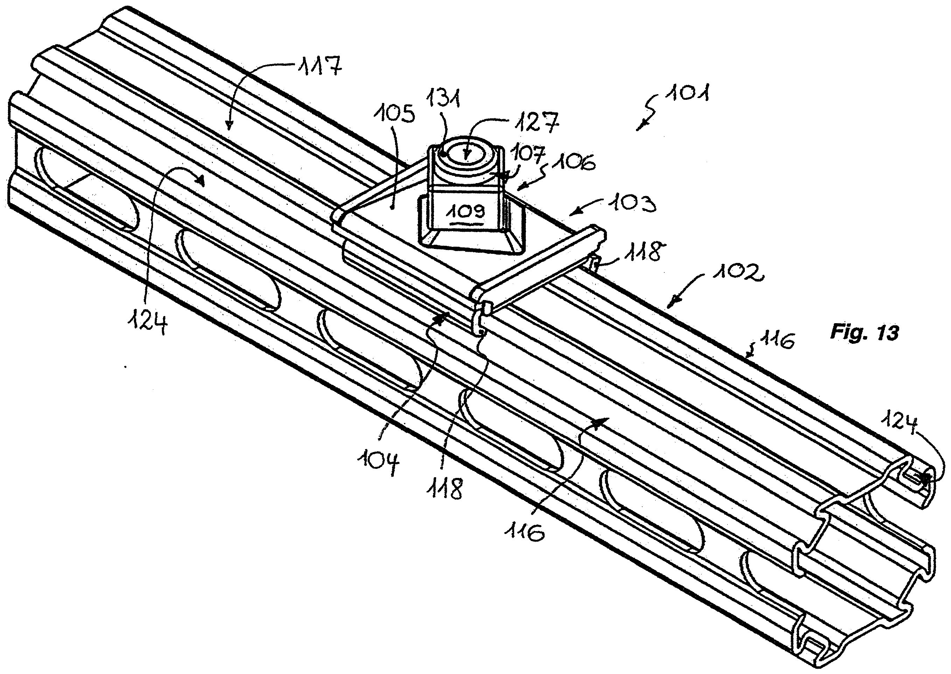

- Fig. 13: ein anderes Ausführungsbeispiel einer Montage-Einheit in perspektivischer Darstellung, welche Montage-Einheit auch hier aus einer Montageschiene und einer daran montierten, zwei Klammerteile aufweisenden Halteklammer besteht, wobei die Klammerteile dieser Halteklammer zwischen einer Offenstellung und der hier gezeigten Spann- oder Halteposition quer zur Schienen-Längsrichtung verschiebbar und verschwenkbar aneinander gehalten sind, und wobei die Klammerteile der hier erkennbaren Halteklammer mittels einer Spanneinrichtung in der Spann- oder Halteposition derart aneinander fixiert werden können, dass diese Klammerteile einen Teilbereich der Montageschiene fest zwischen sich einspannen,
- Fig. 14: die Halteklammer der in Figur 13 gezeigten Montage-Einheit in einer perspektivischen Seitenansicht,
- Fig. 15: die Halteklammer aus Figur 14 in einer perspektivischen Seitenansicht mit gegenüber Figur 14 geändertem Blickwinkel,
- Fig. 16: die Halteklammer aus den Figuren 13 bis 15 in einer auseinandergezogenen Darstellung ihrer einzelnen Bestandteile,
- Fig. 17: das der Montageschiene zugewandte erste Klammerteil der in den Figuren 13 bis 16 gezeigten Halteklammer, wobei über dieses erste Klammerteil ein Spannzapfen vorsteht, der an seinem dem Klammerteil abgewandten Zapfenende einen Zapfenkopf aufweist, an dem zwei sich in axialer Richtung des Spannzapfens erstreckende Spannnocken vorgesehen sind,
- Fig. 18: das erste Klammerteil der in den Figuren 13 bis 17 gezeigten Halteklammer mit dem über das erste Klammerteil vorstehenden Spannzapfen, wobei auf dem Spannzapfen zwischen dessen Zapfenkopf und dem ersten Klammerteil eine als Federelement dienende Federscheibe multigewellt sitzt, deren Scheibenöffnung der Spannzapfen durchsetzt,
- Fig. 19: das zweite Klammerteil der in den Figuren 13 bis 17 gezeigten Halteklammer in einer perspektivischen Draufsicht,
- Fig. 20: das zweite Klammerteil aus Figur 19 in einer perspektivischen Unteransicht mit Blick auf die in Gebrauchsstellung dem ersten Klammerteil zugewandte Unterseite des zweiten Klammerteils,
- Fig. 21: den Spannzapfen der in den Figuren 13 bis 17 gezeigten Halteklammer in einer perspektivischen Seitenansicht,
- Fig. 22: einen in Seitenansicht gezeigten und gegenüber Figur 21 vergleichbar ausgestalteten Spannzapfen, der hier lediglich einen etwas längeren Zapfenkopf mit einem an der freien Stirnfläche des Zapfenkopfes vorgesehenen Innengewinde aufweist,
- Fig. 23: ein hülsenförmiges Spannelement der in den Figuren 13 bis 17 gezeigten Halteklammer, wobei das Spannelement in seinem Hülseninnenraum einen die Hülsenöffnung bereichsweise umgrenzenden Ringabsatz hat, der zwei Führungsbahnen trägt, die mit jeweils einem in axialer Richtung am Zapfenkopf des Spannzapfens vorstehenden Spannnocken zusammenwirken, und
- Fig. 24: das Spannelement aus Figur 23 in einer perspektivischen Darstellung, wobei die am Ringabsatz vorgesehenen Führungsbahnen im Spannelement durchscheinen.

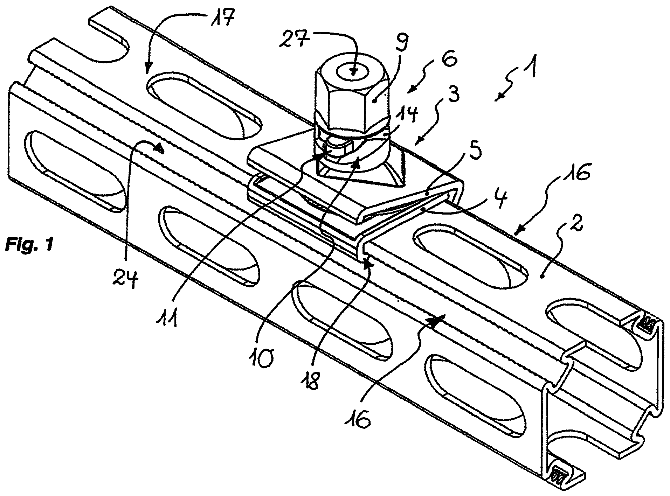

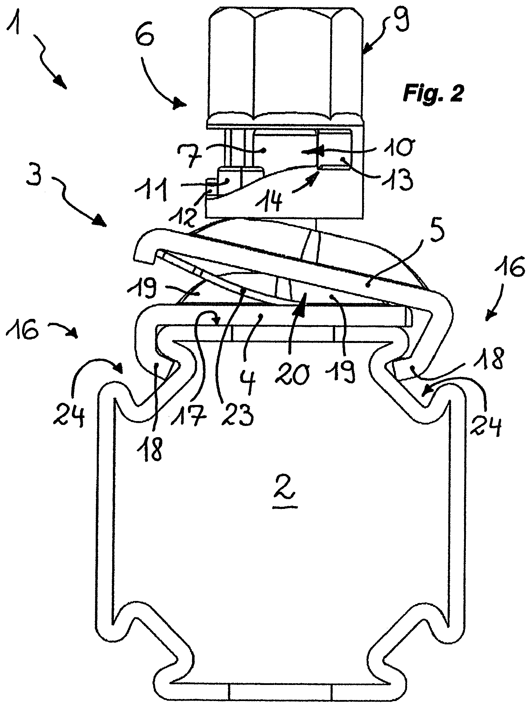

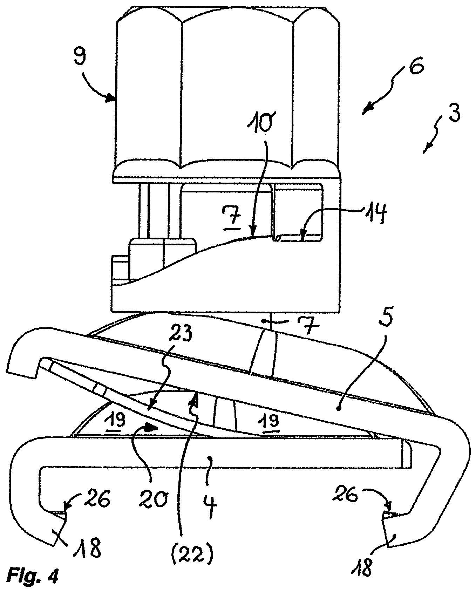

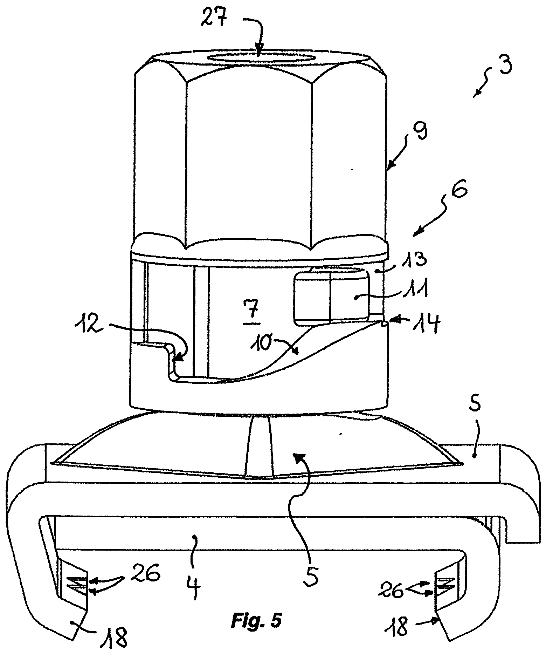

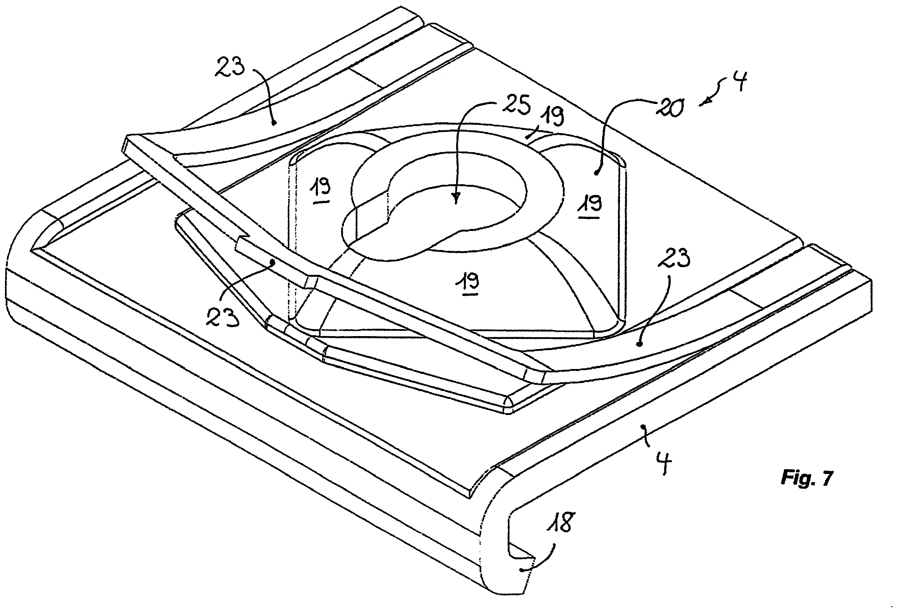

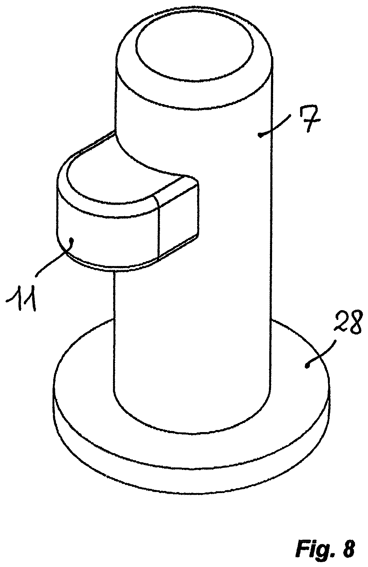

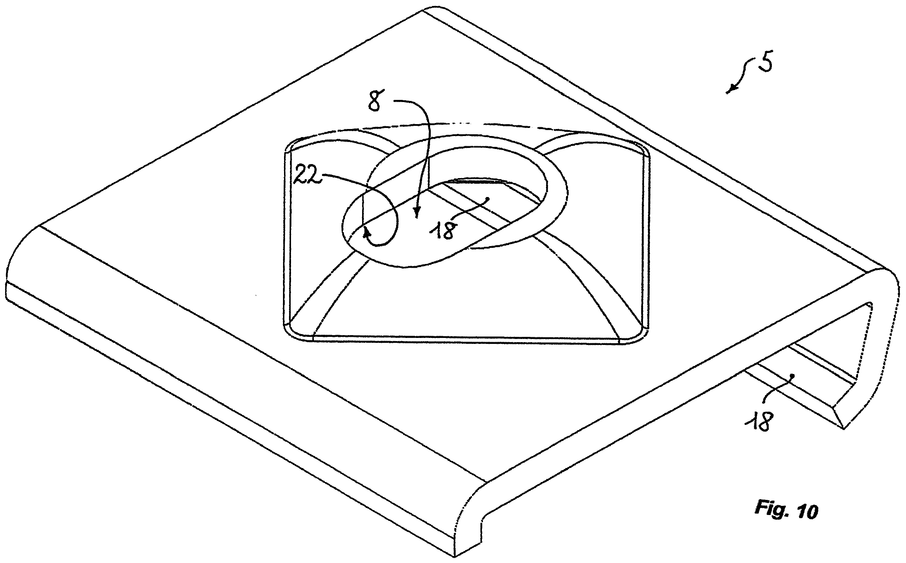

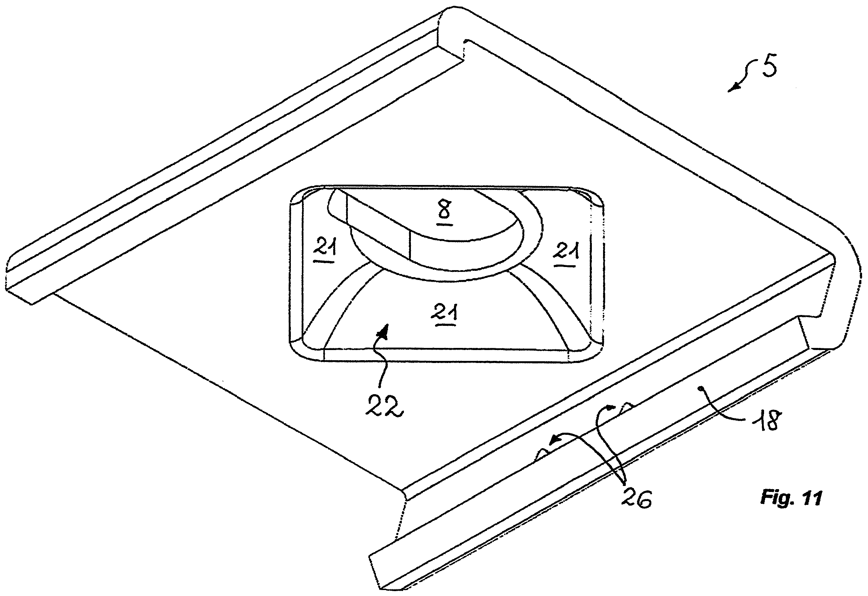

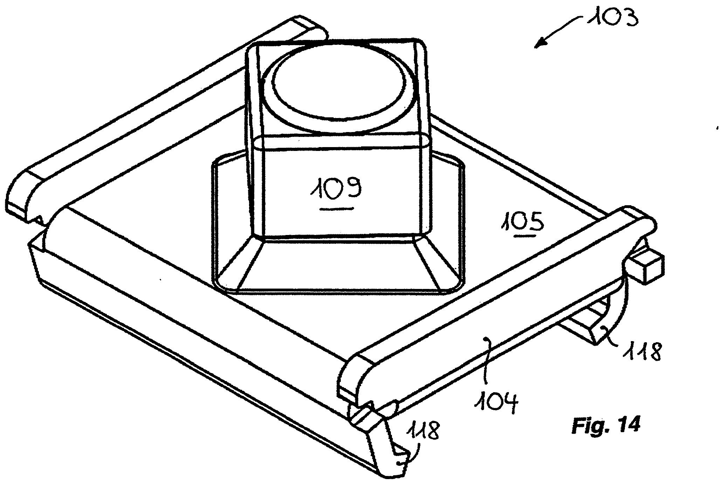

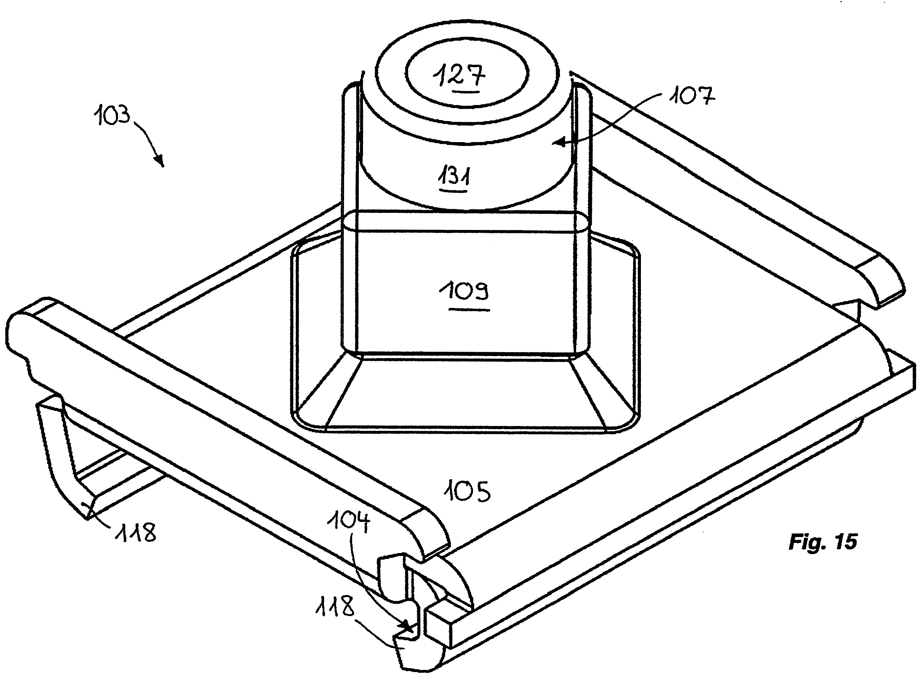

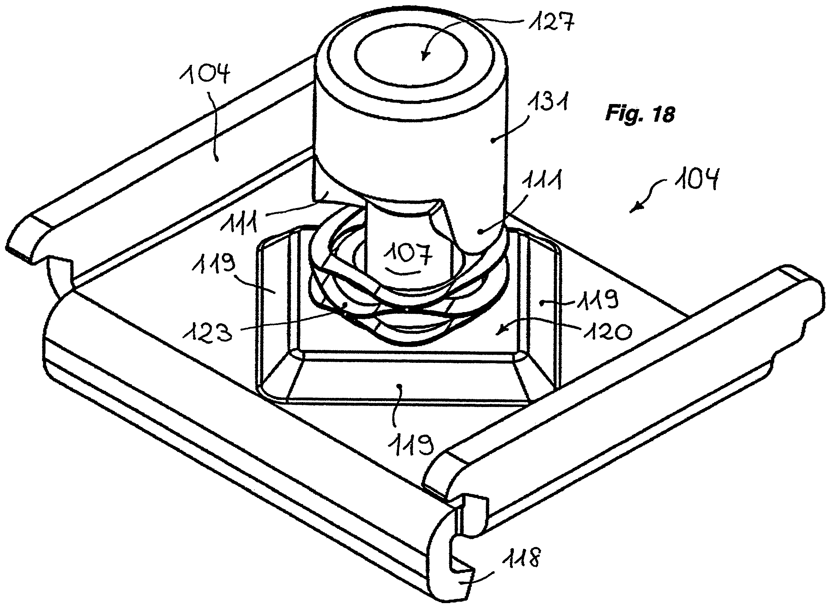

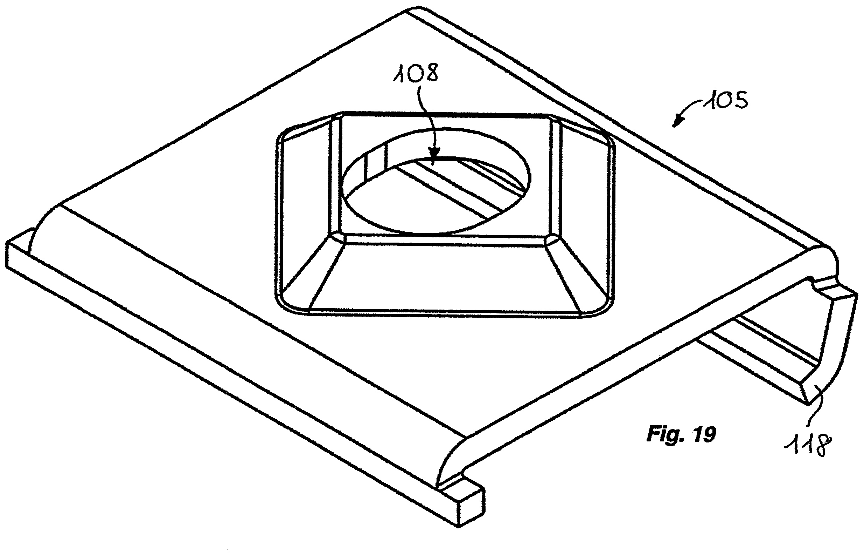

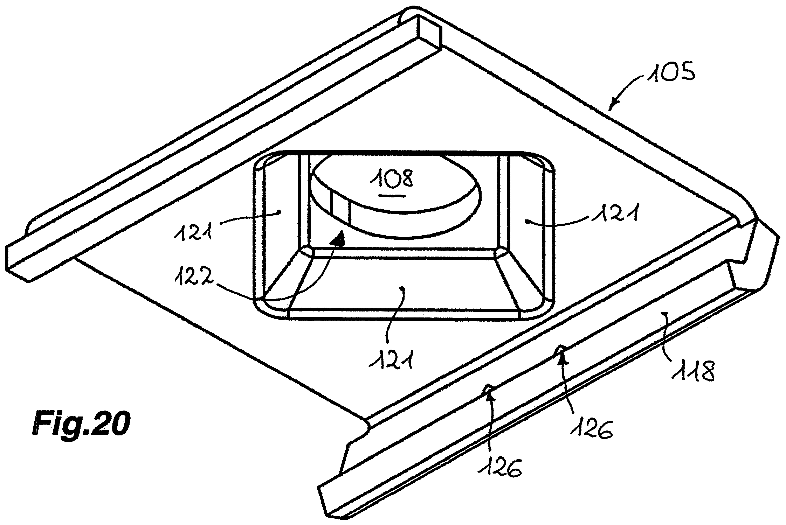

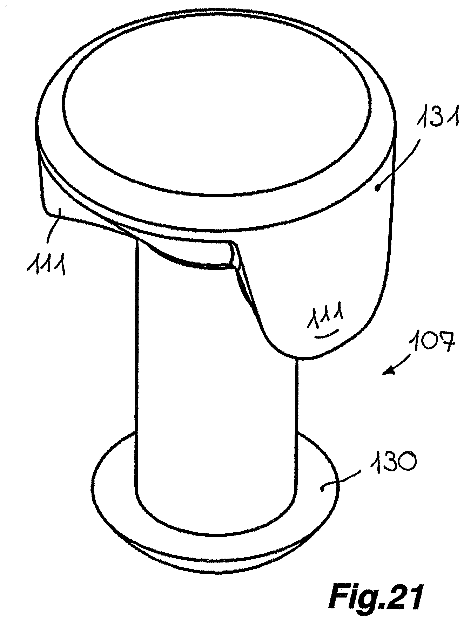

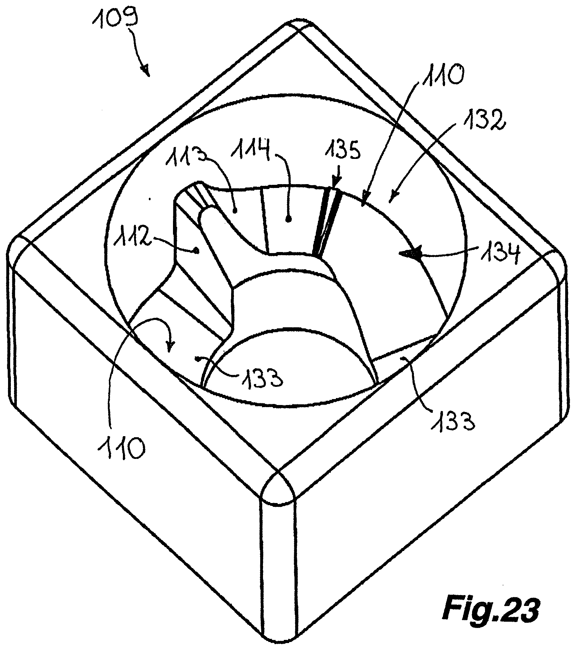

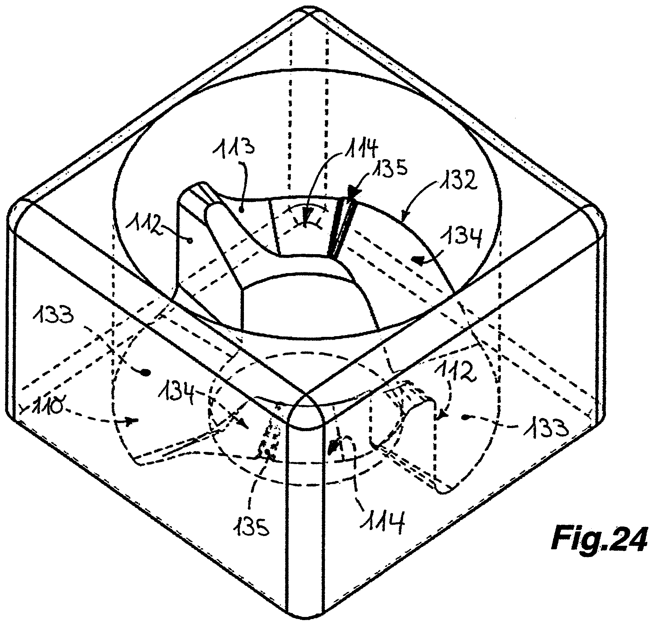

In den Figuren 1 bis 12 und 13 bis 24 sind zwei Ausführungen 1, 101 einer Montage-Einheit und deren Bestandteile dargestellt, welche Montage-Einheiten 1, 101 beispielsweise in der Gebäudetechnik zur Konstruktion von Vorwandinstallationen oder im Anlagenbau zur bauseitigen Befestigung von Versorgungsleitungen verwendet werden können. Die Montage-Einheiten 1, 101 weisen zumindest eine Montageschiene 2, 102 auf, an der wenigstens eine Halteklammer 3, 103 lösbar fixierbar ist. Die wenigstens eine Halteklammer 3, 103 hat zwei Klammerteile 4, 5; 104, 105, welche mittels einer Spanneinrichtung 6,106 derart gegeneinander verspannbar sind, dass diese Klammerteile 4, 5; 104, 105 in einer Halteposition die Montageschiene 2, 102 zumindest in einem Teilbereich zwischen sich einspannen können.

Die dazu an der Halteklammer 3, 103 vorgesehene Spanneinrichtung 6, 106 hat einen Spannzapfen 7, 107, der an einem ersten Klammerteil 4, 104 der Klammerteile 4, 5; 104, 105 vorsteht und eine Durchtrittsöffnung 8, 108 an einem zweiten Klammerteil 5, 105 durchsetzt. Die Spanneinrichtung 6, 106 weist auch ein hülsenförmiges Spannelement 9, 109 zur Druckbeaufschlagung des zweiten Klammerteils 5, 105 auf, das mit seinem Hülseninnenraum an oder auf dem Spannzapfen 7, 107 drehbar gelagert ist und wenigstens eine Führungsbahn 10, 110 mit kurven- oder spiralförmigem Bahnverlauf hat, auf der mindestens ein zugeordneter und am Spannzapfen 7 gehaltener Zapfenbart 11 oder wenigstens eine zugeordnete und am Spannzapfen 107 gehaltene Spannnocke 111 derart geführt ist, dass eine relative Drehbewegung zwischen Spannelement 9, 109 und Spannzapfen 7, 107 in eine Längsbewegung des Spannelements 9, 109 am Spannzapfen 7, 107 umgesetzt wird.

Die wenigstens eine Führungsbahn 10, 110 kann - wie hier - eine Steigung aufweisen, derart, dass durch eine Drehung weniger als 180° und insbesondere gleich oder weniger als 90° das Spannelement 9, 109 zwischen seiner Offenposition und der Spann- oder Halteposition bewegbar ist. Durch diese geringe Relativverdrehung von Spannzapfen 7, 107 und Spannelement 9, 109 wird eine einfache Handhabung der hier gezeigten Montage-Einheiten 1, 101 auch unter beengten Platzverhältnissen begünstigt. Da die wenigstens eine Führungsbahn 10, 110 die Position des Spannelements 9, 109 am Spannzapfen 7, 107 auch in der Spann- oder Haltestellung festlegt, lässt sich der von der Spanneinrichtung 6, 106 in der Spann- oder Halteposition erzeugte und auf die Klammerteile 4, 5; 104, 105 einwirkende Anpressdruck auf einen definierten Wert festlegen.

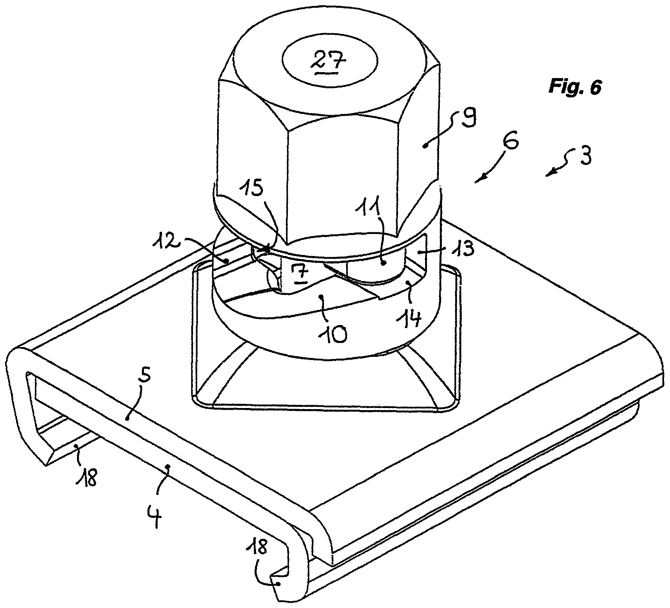

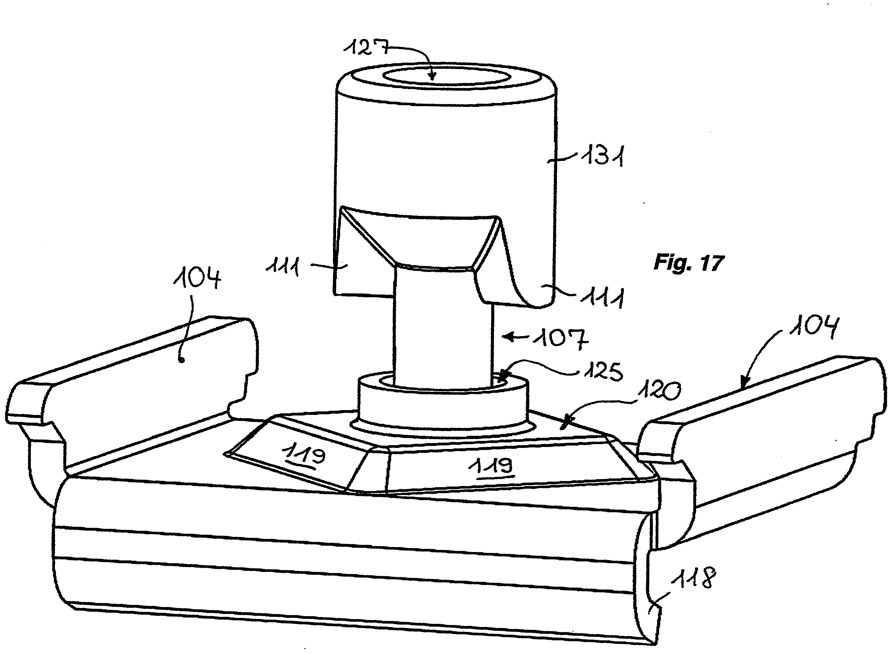

Wie aus einem Vergleich der Figuren 1 bis 6 beziehungsweise einer zusammenschauenden Betrachtung der Figuren 17 und 23 bis 24 deutlich wird, ist der mindestens eine, am Spannzapfen 7 gehaltene Zapfenbart 11 oder am Spannzapfen 107 gehaltene Spannnocken 111 auf der ihm zugeordneten Führungsbahn 10 bzw. 110 zwischen der beispielsweise in den Figuren 1 bis 5 gezeigten Offenposition und der in Figur 6 dargestellten Spann- oder Halteposition bewegbar. Dabei ist der Führungsweg des mindestens einen Zapfenbarts 11 oder Spannnockens 111 zwischen der Offenposition und der Spann- oder Halteposition bewegbar, wobei dieser Führungsweg des mindestens einen Zapfenbarts 11 oder Spannnockens 111 auf der Führungsbahn 10, 110 beidseits durch jeweils einen Führungsanschlag 12, 13; 112, 113 begrenzt wird.

In den Figuren 6 und 23 bis 24 ist erkennbar, dass in jeder der Führungsbahnen 10, 110 eine Einsenkung 14, 114 vorgesehen ist, in welche Einsenkung 14, 114 der mindestens eine Zapfenbart 11 oder Spannnocken 111 in der Spann- oder Haltestellung einrastet.

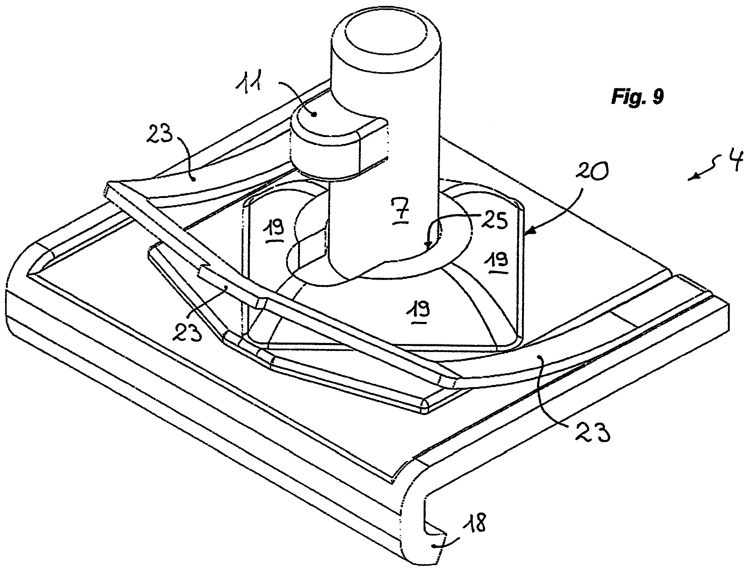

Aus einem Vergleich insbesondere der Figuren 9 bis 11 und 13 bis 16 wird deutlich, dass die Halteklammer 3, 103 zwei Klammerteile 4, 5; 104, 105 hat, die jeweils mindestens eine, einen benachbarten Schienen-Längsrand 16, 116 der eine Schienen-Längsseite 17, 117 begrenzenden Schienen-Längsränder 16, 116 hintergreifende Klammer-Kralle 18, 118 aufweisen, und von denen ein, den einen Schienen-Längsrand 16, 116 hintergreifendes erstes Klammerteil 4, 104 wenigstens eine, von mindestens einer Auflaufschräge 19, 119 begrenzte Ausformung 20, 120 und ein, den anderen Schienen-Längsrand 16, 116 hintergreifendes zweites Klammerteil 5, 105 zumindest eine, von wenigstens einer Gegenschräge 21, 121 begrenzte Einformung 22, 122 oder Aussparung tragen. Eine zusammenschauende Betrachtung der Figuren 1 bis 12 und 13 bis 24 macht deutlich, dass die Ausformung 20, 120 einerseits und die Einformung 22, 122 oder Aussparung andererseits der aneinander anliegenden Klammerteile 4, 5; 104, 105 in der Spann- oder Halteposition der Halteklammer 3, 103 formschlüssig aufeinander positioniert sind. Dabei weisen die jeweils als formgleiche Ausprägungen der Klammerteile 4, 5; 104, 105 ausgebildeten Geometrien 20, 22; 120, 122 hier jeweils einen quadratischen oder rautenförmigen Querschnitt auf. Die Diagonalen des quadratischen oder - wie hier - rautenförmigen Querschnitts der Ausformung 20, 120 und der Einformung 22, 122 oder Aussparung sind dabei in Schienen-Längsrichtung beziehungsweise rechtwinklig zur Schienen-Längsrichtung orientiert.

Die an dem in der Halteposition an der zumindest einen Schienen-Längsseite 17, 117 anlegbaren ersten Klammerteil 4, 104 vorgesehene Ausformung 20, 120 steht in die dem zweiten Klammerteil 5, 105 zugewandte Richtung vor. Zwischen dem ersten Klammerteil 4, 104 und dem zweiten Klammerteil 5, 105 ist ein Federelement 23, 123 angeordnet, das die Klammerteile 4, 5; 104, 105 in entlastetem oder unverspanntem Zustand der Spanneinrichtung 6, 106 auseinanderdrückt.

Aus einer zusammenschauenden Betrachtung der Figuren 1, 2 und 13 wird deutlich, dass die Montageschiene 2, 102 der hier dargestellten Montage-Einheiten 1, 101 im Schienen-Querschnitt eine im Querschnitt rechteckige und vorzugsweise eine quadratische Außenkontur aufweist. Dabei hat die Montageschiene 2, 102 in jedem ihrer Eckbereiche eine Haltenut 24, 124, deren Nutöffnung durch die, an den jeweiligen Schienen-Eckbereich angrenzenden Schienen-Längsränder 16, 116 begrenzt ist. Die in den Schienen-Eckbereichen der Montageschiene 2, 102 angeordneten Haltenuten 24, 124 sind hier als Schwalbenschwanz-Nuten ausgebildet.

Die Halteklammer 3, 103 besteht aus dem unteren ersten Klammerteil 4, 104, das die von mindestens einer Auflaufschräge 19, 119 begrenzte Ausformung 20, 120 trägt, die hier als rautenförmige Ausprägung ausgebildet ist. An dem ersten Klammerteil 4, 104 liegt das obere zweite Klammerteil 5, 105 an, wobei die Ausformung 20, 120 des ersten Klammerteiles 4, 104 in die hier ebenfalls als rautenförmige Ausprägung ausgebildete und durch die Gegenschrägen 21, 121 begrenzte Einformung 22, 122 des zweiten Klammerteiles 5, 105 vorsteht. Die Ausprägung 20 und 120 und die Einformung 22, 122 an den Klammerteilen 4, 5; 104, 105 weisen dieselbe geometrische Form auf. Hierdurch werden die Klammerteile 4, 5; 104, 105 formschlüssig aufeinander positioniert. Das Federelement 23, 123 drückt das obere zweite Klammerteil 5, 105 gegen das hülsenförmige Spannelement 9, 109.

Bei der Montage der Halteklammer 3, 103 auf der Montageschiene 2, 102 wird die Halteklammer 3, 103 auf die Montageschiene 2, 102 aufgedrückt. Dabei hebt sich das zweite Klammerteil 5, 105 von dem der Klammer-Kralle 18, 118 abgewandten Eckrandbereich des ersten Klammerteils 4, 104 ab und verschiebt sich, bis die an den Klammerteilen 4, 5; 104, 105 vorgesehenen Klammer-Krallen 18, 118 in die schwalbenschwanzförmigen Haltenuten 24, 124 der Montageschiene 2, 102 eingreifen. Durch das Federelement 23, 123 werden die beiden Klammerteile 4, 5; 104, 105 der Halteklammer 3, 103 zusammengezogen und lassen die Halteklammer 3, 103 an der Montageschiene 2, 102 einschnappen. Die Halteklammer 3, 103 ist somit vorfixiert und hält sich selbständig an der Montageschiene 2, 102. An den die Haltenuten 24, 124 begrenzenden Schienen-Längsrändern 16, 116 können in Längsrichtung orientierte Profilierungen vorgesehen sein, die mit an den Klammer-Krallen 18, 118 angeordneten Rastnocken 25, 125 zusammenwirken. Die an den Schienen-Längsrändern 16, 116 vorgesehenen Profilierungen und die mit ihnen zusammenwirkenden Rastnocken 26, 126 dienen als Rutschhemmung der Halteklammer 3, 103 in Schienen-Längsrichtung.

Durch bloßes Verdrehen des Spannelements 9, 109 um hier 90° wandert der zumindest eine, am Umfang des Spannelements 9, 109 vorgesehene Zapfenbart 11 oder Spannnocken 111 auf der Führungsbahn 10, 110 bis zu dem die Spann- oder Halteposition begrenzenden Führungsanschlag 13, 113. In dieser Spann- oder Halteposition rastet der zumindest eine Zapfenbart 11 oder wenigstens eine Spannnocken 111 in die Einsenkung 14 der ihm zugeordneten Führungsbahn 10, 110 ein. Hierbei muss der die Einsenkung 14, 114 begrenzende Absatz in der Führungsbahn 10, 110 überwunden werden. Dies dient als Wiederöffnungssicherung. Die aus dem Spannzapfen 7, 107, dem Spannelement 9, 109 und dem zumindest einen Zapfenbart 11 beziehungsweise Spannnocken 111 bestehende Spanneinrichtung 6, 106 schiebt die beiden Klammerteile 4, 5; 104, 105 über die hier als Ausformung 20, 120 sowie als Einformung 22, 122 ausgebildeten Geometrien der Klammerteile 4, 5; 104, 105 vollständig zusammen, so dass die Ausformung 20, 120 und die Einformung 22, 122 in dieser Spann-oder Halteposition formschlüssig aufeinander liegen. In der Spann- oder Halteposition wird die Halteklammer 3, 103 über die die Schienen-Längsseite 17, 117 begrenzenden Schienen-Längsränder 16, 116 fest an das Profil der Montageschiene 2, 102 gespannt. Durch einen Versatz der in die Klammerteile 4, 5; 104, 105 eingeprägten Ausprägungen 20, 22; 120, 122 lässt sich die Einspannkraft der Klammerteile 4, 5; 104, 105 festlegen, mit der diese die Montageschiene 2, 102 an den die Schienen-Längsseite 17, 117 begrenzenden Schienen-Längsrändern 16, 116 zwischen sich einspannen.

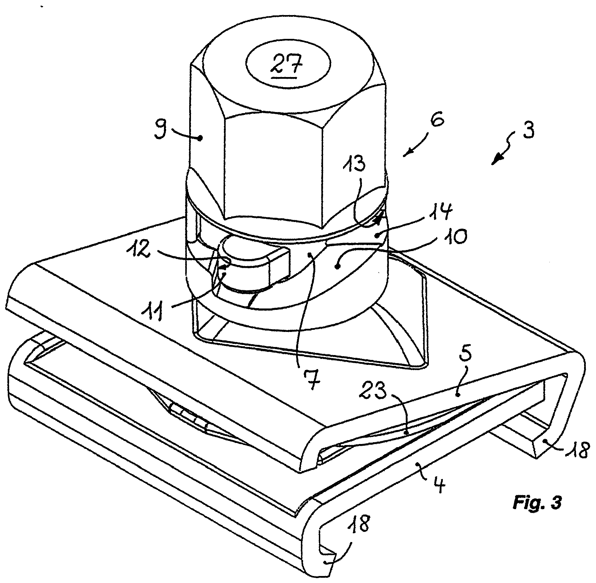

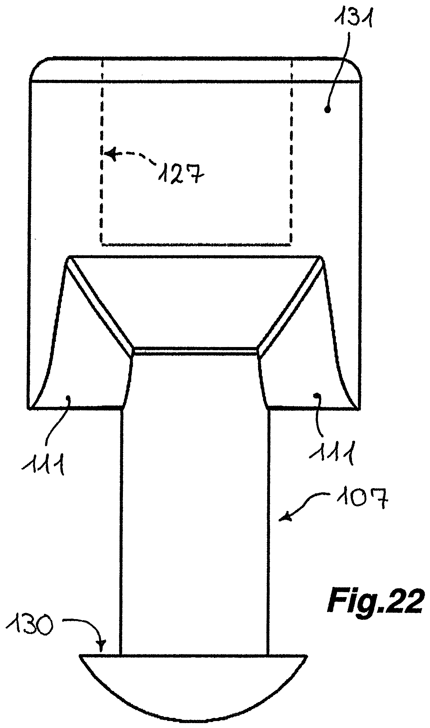

Mit der Spanneinrichtung 6, 106 der hier dargestellten Halteklammer 3, 103 und der mit dem zumindest einen Zapfenbart 11 oder Spannnocken 111 bajonettverschlussartig zusammenwirkenden Führungsbahn 10, 110 kann die Halteklammer 3, 103 in einer vordefinierten Bewegung beziehungsweise Verdrehung an der Montageschiene 2, 102 endfest angebracht werden. Die vordefinierte Verdrehung um hier 90° ermöglicht zudem die Montage und Demontage der Halteklammer 3, 103 auch auf engstem Raum. Um eine Verdrehung des Spannelements 9, 109 zu erleichtern, weist das Spannelement 9, 109 an seinem Umfang oder an seinen den Klammerteilen 4, 5 abgewandten Stirnendbereich eine Werkzeugangriffsfläche zum Ansetzen eines Maul- oder Ringschlüssels auf. Wie beispielsweise in den Figuren 3 und 22 angedeutet ist, kann die Halteklammer 3, 103 der hier dargestellten Montage-Einheiten 1, 101 an ihrer der Montageschiene 2, 102 abgewandten Seite beispielsweise ein Befestigungsloch 27, 127 mit Innengewinde aufweisen, an welchem Befestigungsloch 27, 127 beispielsweise ein, mit einer Rohrschelle verbundener Gewindestab oder auch andere Systembauteile befestigt werden können. Während bei der Halteklammer 3 der in den Figuren 1 bis 12 gezeigten Montage-Einheit 1 das Befestigungsloch 27 an dem Spannelement 9 vorgesehen ist, weist bei der Halteklammer 103 der in den Figuren 13 bis 24 gezeigten Montage-Einheit 101 der Spannzapfen 107 an seiner der Montageschiene 102 abgewandten Stirnfläche das Befestigungsloch 127 auf.

Bei der in den Figuren 1 bis 12 gezeigten Montage-Einheit 1 steht am Spannzapfen 7 lediglich ein Zapfenbart 11 radial vor, der in einem der Führungsbahn 10 aufweisenden und sich in Umfangsrichtung des Spannelements 9 erstreckendes Langloch geführt ist. Das die Führungsbahn aufweisende Langloch könnte zum Außenumfang des Spannelements 9 geschlossen ausgebildet sein. Wie aus Figur 3 deutlich wird, ist das die Führungsbahn 10 aufweisende Langloch zum Außenumfang des Spannelements 9 hier offen ausgebildet. Um den Zapfenbart 11 in den Hülseninnenraum des hülsenförmigen Spannelements 9 einfädeln zu können, ist am Hülseninnenumfang des Spannelements 9 wenigstens eine in der Führungsbahn 10 mündende Nut 15 vorgesehen zum Einfädeln des Zapfenbarts 11 in die Führungsbahn 10. Durch die schlüssellochartige Halteöffnung am ersten Klammerteil 4 der Halteklammer 3 ist der Spannzapfen 7 durchgesteckt, bis ein an den Spannzapfen 7 angeformter Ringflansch 28 am ersten Klammerteil 4 anliegt. Der Spannzapfen 7 und das erste Klammerteil 4 der Halteklammer 3 können fest oder auch lösbar miteinander verbunden sein. Der Spannzapfen 7 trägt den Zapfenbart 11, der am Zapfenumfang des Spannzapfens 7 vorzugsweise radial vorsteht und der als Hinterschnitt im Spannelement 9 dient. Bei der Halteklammer 3 der in den Figuren 1 bis 12 gezeigten Montage-Einheit 1 ist das zwischen den Klammerteilen 4, 5 der Halteklammer 3 vorgesehene Federelement 23 als U-förmiger Federbügel ausgebildet. Das als U-förmiger Federbügel ausgebildete Federelement 23 drückt die Klammerteile 4, 5 der Halteklammer 3 in unbelastetem Zustand der Spanneinrichtung 6 auseinander und presst das obere zweite Klammerteil 5 gegen das hülsenförmige Spannelement 9. Dabei liegt der Angriffspunkt des Federelements 23 am Klammerteil 5 am äußersten, der Klammer-Kralle 18 abgewandten Querrandbereich des zweiten Klammerteils 5. Durch den hieraus resultierenden Hebel wird das zweite Klammerteil 5 gegen den, der Klammer-Kralle 18 des ersten Klammerteils 4 abgewandten Querrandbereich des ersten Klammerteils 4 gedrückt. In Offenstellung, d.h. im geöffneten Zustand der Halteklammer 3 liegt der Zapfenbart 11 auf dem, den Klammerteilen 4, 5 zugewandten Bahnabschnitt der Führungsbahn 10 des Spannelements 9. Dabei dient der zwischen der Führungsbahn 10 und der Nut 15 angeordnete Absatz als Führungsanschlag 12 der Führungsbahn 10 in Offenstellung. Um das Spannelement 9 zwischen der Spann- und Haltestellung einerseits und der Offenposition andererseits zu bewegen und um dabei eine Verdrehung des Spannelements 9 zu erleichtern, ist die am Spannelement 9 vorgesehene Werkzeugangriffsfläche an dem den Klammerteilen 4, 5 abgewandten Stirnendbereich des Spannelements 9 angeordnet. Die am Spannelement 9 vorgesehene Werkzeugangriffsfläche kann beispielsweise als regelmäßiges Vieleck oder insbesondere - wie hier - als sechseckige Schlüsselfläche ausgebildet sein, wobei an den zueinander parallelen Schlüsselflächen sich ein Maul- oder Ringschlüssel ansetzen lässt.

Der Spannzapfen 107 der in den Figuren 13 bis 24 dargestellten Montage-Einheit 101 durchsetzt eine Halteöffnung 125 im ersten Klammerteil 104, bis der Spannzapfen 107 mit einem am Umfang des Spannzapfens 107 vorgesehenen Ringabsatz 130 am ersten Klammerteil 104 anliegt. In dieser Position steht der Spannzapfen 107 über das erste Klammerteil 104 vor. An seinem über das erste Klammerteil 104 vorstehenden freien Zapfenende weist der Spannzapfen 107 einen Zapfenkopf 131 auf, an dem hier zwei Spannnocken 111 einstückig angeformt sind, die sich auf gegenüberliegenden Seiten des Zapfenkopfs 131 in axialer Richtung zur zugeordneten Führungsbahn 110 am Spannelement 109 erstrecken. Das Spannelement 109 ist hülsenförmig ausgebildet und sein Hülseninnenraum wird vom Spannzapfen 107 durchsetzt. Das hülsenförmige Spannelement 109 hat eine Hülsenstirnfläche oder - wie hier - einen Ringabsatz 132, welche/welcher die wenigstens eine Führungsbahn 110 trägt. Der die Führungsbahnen 10 auf gegenüberliegenden Seiten seiner Ringöffnung tragende Ringabsatz 132 unterteilt den Hülseninnenraum des Spannelements 109 in einen Abschnitt reduzierten Querschnitts und einen demgegenüber im Querschnitt erweiterten Abschnitt. Dabei steht der Zapfenkopf 131 mit seinen den Klammerteilen 104, 105 zugewandten Teilbereich in den querschnittserweiterten Abschnitt des Hülseninnenraums des Spannelements 109 vor.

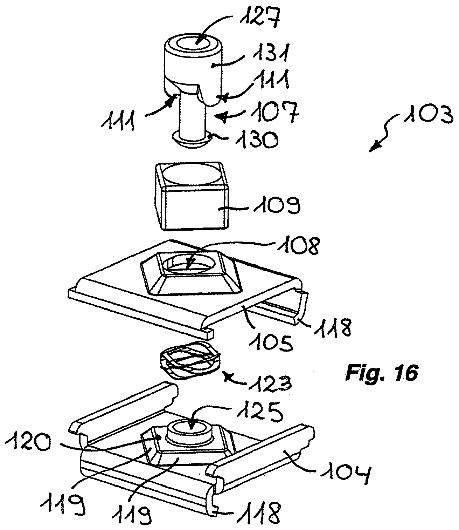

In den Figuren 16 bis 18 ist erkennbar, dass der Zapfenkopf 131 zumindest ein einem der Klammerteilen 104, 105 zugewandten Teilbereich seines Außenumfangs durch eine gedachte zylindrische Hülle umgrenzt ist. Durch diesen einen Hüllkreis nicht überschreitenden gerundeten Querschnitt des Zapfenkopfes 131 ist der Zapfenkopf 131 zumindest mit diesem Teilbereich seines Außenumfangs im komplementär geformten und im lichten Querschnitt ebenfalls kreisrunden Hülseninnenraum des Spannelements 109 geführt. Zwischen den Klammerteilen 104, 105 der Halteklammer 103 ist das Federelement 123 vorgesehen, das hier als Federscheibe multigewellt ausgebildet ist. Diese als Federelement 123 dienende multigewellte Federscheibe weist eine Scheibenöffnung auf, die der Spannzapfen 107 durchsetzt.

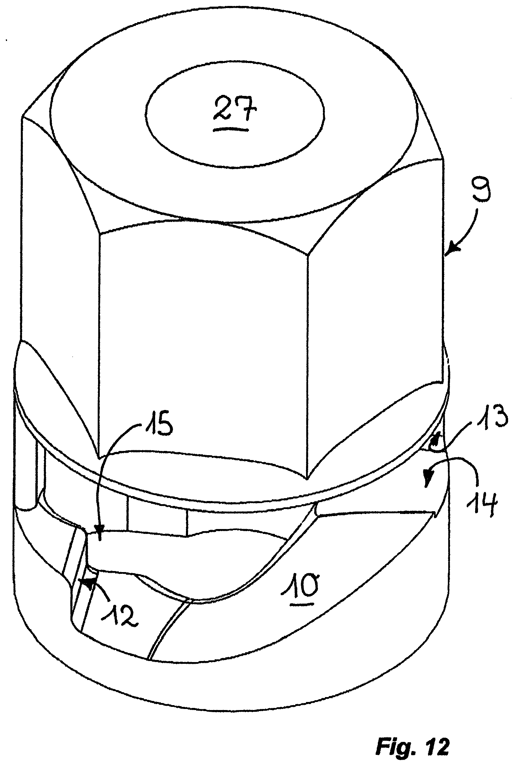

Der Spannzapfen 107 besitzt zwei Spannnocken 111, welche als Hinterschnitte im hülsenförmigen Spannelement 109 dienen. Die am Ringabsatz 132 vorgesehenen und hier kurven- oder spiralförmig ansteigenden Führungsbahnen 110, die jeweils einer der Spannnocken 111 zugeordnet sind, weisen zwei Bahnabschnitte 133, 134 auf. In geöffnetem Zustand liegen die Spannnocken 111 auf dem der Einsenkung 114 abgewandten Bahnabschnitt 133 auf. Auf der der Einsenkung 114 abgewandten Seite ist jede Führungsbahn 110 durch einen Offen-Anschlag 112 begrenzt, welche Offen-Anschläge 112 eine Relativverdrehung von Spannzapfen 107 und Spannelement 109 in Offenstellung begrenzen. Durch das Verdrehen des hülsenförmigen Spannelements 109 um etwa 90° wandern die Spannnocken 111 auf den Führungsbahnen 110 bis zu dem Führungsanschlag 113. Hierbei muss eine Erhöhung 135 auf der Führungsbahn 110 überwunden werden. Diese Erhöhung 135, welche die Einsenkung 114 begrenzt, dient als Wiederöffnungssicherung. Die bajonettverschlussartige Spanneinrichtung 106 schiebt die beiden Klammerhälften 104, 105 über Rautenflächen, welche die Ausformung 120 und die Einformung 122 oder Aussparung bilden. In der Spann- oder Haltestellung wird die Halteklammer 103 der in den Figuren 12 bis 24 gezeigten Montage-Einheit 101 fest an die Montageschiene 102 gespannt. Die Halteklammer 103 der in den Figuren 13 bis 24 gezeigten Montage-Einheit 101 besitzt sowohl einen Führungsanschlag 112 in Offenstellung als auch einen Führungsanschlag 113 in Spann- oder Halteposition. Mit einer Drehung von 90° ist die Halteklammer 103 vollständig an der Montageschiene 102 verriegelt und in der gewünschten Position sicher und fest fixiert.

### Bezugszeichenliste

- 1: Montage-Einheit (gemäß den Figuren 1 bis 12)
- 2: Montageschiene
- 3: Halteklammer
- 4: erstes (unteres) Klammerteil
- 5: zweites (oberes) Klammerteil
- 6: Spanneinrichtung
- 7: Spannzapfen
- 8: Durchtrittsöffnung
- 9: Spannelement
- 10: Führungsbahn
- 11: Zapfenbart
- 12: Führungsanschlag (in Offenstellung)
- 13: Führungsanschlag (in Spann- oder Halteposition)
- 14: Einsenkung
- 15: Nut
- 16: Schienen-Längsrand
- 17: Schienen-Längsseite
- 18: Klammer-Kralle
- 19: Auflaufschräge
- 20: Ausformung
- 21: Gegenschräge
- 22: Einformung
- 23: Federelement
- 24: Haltenut
- 25: Halteöffnung
- 26: Rastnocken
- 27: Befestigungsloch
- 28: Ringflansch
- 101: Montage-Einheit (gemäß den Figuren 13 bis 24)
- 102: Montageschiene
- 103: Halteklammer
- 104: erstes (unteres) Klammerteil
- 105: zweites (oberes) Klammerteil
- 106: Spanneinrichtung
- 107: Spannzapfen
- 108: Durchtrittsöffnung
- 109: Spannelement
- 110: Führungsbahn
- 111: Spannnocken
- 112: Führungsanschlag (in Offenstellung)
- 113: Führungsanschlag (in Spann- oder Halteposition)
- 114: Einsenkung
- 116: Schienen-Längsrand
- 117: Schienen-Längsseite
- 118: Klammer-Kralle
- 119: Auflaufschräge
- 120: Ausformung
- 121: Gegenschräge
- 122: Einformung
- 123: Federelement
- 124: Haltenut
- 125: Halteöffnung
- 126: Rastnocken
- 127: Befestigungsloch
- 128: Ringflansch
- 130: Ringabsatz am Spannzapfen 107
- 131: Zapfenkopf des Spannzapfens 107
- 132: Ringabsatz am Spannelement 109
- 133: erster Bahnabschnitt der Führungsbahn 110
- 134: zweiter Bahnabschnitt der Führungsbahn 110
- 135: Erhöhung auf der Führungsbahn 110

## Patentansprüche

1. Montage-Einheit (1, 101) mit zumindest einer Montageschiene (2, 102), an der (2, 102) wenigstens eine Haltekammer (3, 103) lösbar fixierbar ist, die (3, 103) zwei Klammerteile (4, 5; 104, 105) hat, welche (4, 5; 104, 105) mittels einer Spanneinrichtung (6, 106) derart gegeneinander verspannbar sind, dass die Klammerteile (4, 5; 104, 105) in einer Halteposition die Montageschiene (2, 102) zumindest in einem Teilbereich zwischen sich einspannen, wobei
die Spanneinrichtung (6, 106) einen Spannzapfen (7, 107) hat, der (7, 107) an einem ersten Klammerteil (4, 104) vorsteht und eine Durchtrittsöffnung (8, 108) an einem zweiten Klammerteil (5, 105) durchsetzt, wobei die Spanneinrichtung (6, 106) ein hülsenförmiges Spannelement (9, 109) zur Druckbeaufschlagung des zweiten Klammerteiles (5, 105) hat, das (9, 109) mit seinem Hülseninnenraum an oder auf dem Spannzapfen (7, 107) drehbar gelagert ist, **dadurch gekennzeichnet, dass** das hülsenförmige Spannelement (9,109) wenigstens eine Führungsbahn (10, 110) mit kurven- oder spiralförmigem Bahnverlauf hat, auf der mindestens ein zugeordneter und am Spannzapfen (7, 107) gehaltener Zapfenbart (11) oder Spannnocken (111) derart geführt ist, dass eine relative Drehbewegung zwischen dem Spannelement (9, 109) und dem Spannzapfen (7, 107) in eine Längsbewegung des Spannelements (9, 109) am Spannzapfen (7, 107) umgesetzt wird.

2. Montage-Einheit (1, 101) nach Anspruch 1, **dadurch gekennzeichnet, dass** der mindestens eine Zapfenbart (11) oder Spannnocken (111) auf der ihm zugeordneten Führungsbahn (10, 110) zwischen einer Offenposition und der Spann- oder Halteposition bewegbar ist.

3. Montage-Einheit (1, 101) nach Anspruch 1 oder 2, **dadurch gekennzeichnet, dass** der Führungsweg des mindestens einen Zapfenbarts (11) oder Spannnockens (111) auf der Führungsbahn (10, 110) durch zumindest einen Führungsanschlag (12, 13; 112, 113) und vorzugsweise beidseits durch jeweils einen Führungsanschlag (12, 13; 112, 113) begrenzt ist.

4. Montage-Einheit (1, 101) nach einem der Ansprüche 1 bis 3, **dadurch gekennzeichnet, dass** in der wenigstens einen Führungsbahn/in wenigstens einer der Führungsbahnen (10, 110) eine Einsenkung (14, 114) vorgesehen ist, in welche Einsenkung (14, 114) der mindestens eine Zapfenbart (11) oder Spannnocken (111) in der Spannstellung einrastet.

5. Montage-Einheit (1, 101) nach einem der Ansprüche 1 bis 4, **dadurch gekennzeichnet, dass** die Führungsbahn(en) (10, 110) durch zumindest einen Absatz begrenzt ist/sind, der vorzugsweise einen Führungsanschlag (12, 112) in der Offenposition und/oder der Spannstellung bildet.

6. Montage-Einheit (1, 101) nach einem der Ansprüche 1 bis 5, **dadurch gekennzeichnet, dass** die wenigstens eine Halteklammer (3, 103) zwei Klammerteile (4, 5; 104, 105) hat, die (4, 5; 104, 105) jeweils mindestens eine, einen benachbarten Schienen-Längsrand (16, 116) der eine Schienen-Längsseite (17, 117) begrenzenden Schienen-Längsränder (16, 116) hintergreifende Klammer-Kralle (18, 118) aufweisen, und von denen ein, den einen Schienen-Längsrand (16, 116) hintergreifendes erstes Klammerteil (4, 104) wenigstens eine, von mindestens einer Auflaufschräge (19, 119) begrenzte Ausformung (20, 120) und ein, den anderen Schienen-Längsrand (16, 116) hintergreifendes zweites Klammerteil (5, 105) zumindest eine, von wenigstens einer Gegenschräge (21, 121) begrenzte Einformung (22, 122) oder Aussparung tragen, und dass die Ausformung (20, 120) einerseits und die Einformung (22, 122) oder Aussparung andererseits der aneinander anliegenden Klammerteile (4, 5; 104, 105) in der Spann- oder Halteposition der Halteklammer (3, 103) formschlüssig aufeinander positioniert sind.

7. Montage-Einheit (1, 101) nach Anspruch 6, **dadurch gekennzeichnet, dass** die Ausformung (20, 120) und die Einformung (22, 122) oder Aussparung jeweils einen quadratischen oder rautenförmigen Querschnitt aufweisen.

8. Montage-Einheit (1, 101) nach einem der Ansprüche 6 bis 7, **dadurch gekennzeichnet, dass** die Diagonalen des quadratischen oder rautenförmigen Querschnitts der Ausformung (20, 120) und der Einformung (22, 122) oder Aussparung in Schienen-Längsrichtung beziehungsweise rechtwinklig zur Schienen-Längsrichtung orientiert sind.

9. Montage-Einheit (1, 101) nach einem der Ansprüche 6 bis 8, **dadurch gekennzeichnet, dass** an den, in der Halteposition an die zumindest eine Schienen-Längsseite (17, 117) anliegenden ersten Klammerteil (4, 104) die Ausformung (20, 120) vorgesehen ist, die (20, 120) in die dem zweiten Kammerteil (5, 105) zugewandte Richtung vorsteht.

10. Montage-Einheit (1, 101) nach einem der Ansprüche 6 bis 9, **dadurch gekennzeichnet, dass** die am ersten Klammerteil (4, 104) vorgesehene Ausformung (20, 120) und die am zweiten Klammerteil (5, 105) vorgesehene Einformung (22, 122) jeweils als vorzugsweise formgleiche Ausprägungen dieser Klammerteile (4, 5; 104, 105) ausgebildet sind.

11. Montage-Einheit (1, 101) nach einem der Ansprüche 1 bis 10, **dadurch gekennzeichnet, dass** die Montageschiene (2, 102) im Schienen-Querschnitt eine rechteckige und vorzugsweise eine quadratische Außen-Querschnittskontur aufweist.

12. Montage-Einheit (1, 101) nach einem der Ansprüche 1 bis 11, **dadurch gekennzeichnet, dass** die Montageschiene (2, 102) in jedem ihrer Eckbereiche eine Haltenut (24, 124) aufweist, deren Nutöffnung durch die, an dem jeweiligen Schienen-Eckbereich angrenzenden Schienen-Längsränder (16, 116) begrenzt ist.

13. Montage-Einheit (1, 101) nach Anspruch 12, **dadurch gekennzeichnet, dass** die in den Schienen-Eckbereichen angeordneten Haltenuten (24, 124) als Schwalbenschwanz-Nuten ausgebildet sind.

14. Montage-Einheit (1, 101) nach einem der Ansprüche 1 bis 13, **dadurch gekennzeichnet, dass** zwischen dem ersten und dem zweiten Klammerteil (4, 5; 104, 105) der wenigstens einen Halteklammer (3, 103) mindestens ein Federelement (23, 123) angeordnet ist, welches (23, 123) die Klammerteile (4, 5; 104, 105) in entlastetem Zustand der Spanneinrichtung (6, 106) auseinanderdrückt.

15. Montage-Einheit (1) nach Anspruch 14, **dadurch gekennzeichnet, dass** das zumindest eine Federelement (23) als Federbügel ausgebildet ist, der vorzugsweise mit dem ersten Klammerteil (4) verbunden ist.

16. Montage-Einheit (1) nach Anspruch 14 oder 15, **dadurch gekennzeichnet, dass** das zumindest eine Federelement (23) das zweite Klammerteil (5) an dessen der mindestens einen Klammer-Kralle (18) abgewandten Querrandbereich federnd beaufschlagt.

17. Montage-Einheit (101) nach Anspruch 14, **dadurch gekennzeichnet, dass** das zumindest eine Federelement (123) als multigewellte Federscheibe ausgebildet ist.

18. Montage-Einheit (101) nach Anspruch 17, **dadurch gekennzeichnet, dass** die zumindest eine Federscheibe (123) eine Scheibenöffnung hat, die der Spannzapfen (107) durchsetzt und/oder die zwischen dem ersten und dem zweiten Klammerteil (104, 105) angeordnet ist.

19. Montage-Einheit (1) nach einem der Ansprüche 1 bis 18, **dadurch gekennzeichnet, dass** der mindestens eine Zapfenbart (11) am Zapfenumfang des Spannzapfens (7) vorzugsweise radial vorsteht.

20. Montage-Einheit (1) nach einem der Ansprüche 1 bis 19, **dadurch gekennzeichnet, dass** am Hülseninnenumfang des Spannelements (9) wenigstens eine in der Führungsbahn (10) mündende Nut (15) vorgesehen ist zum Einfädeln des mindestens einen Zapfenbarts (11) in die Führungsbahn (10) .

21. Montage-Einheit (101) nach einem der Ansprüche 1 bis 18, **dadurch gekennzeichnet, dass** der zumindest eine Spannnocken (111) sich am Spannzapfen (107) in axialer Richtung zur zugeordneten Führungsbahn (110) hin erstreckt.

22. Montage-Einheit (101) nach einem der Ansprüche 1 bis 21, **dadurch gekennzeichnet, dass** das hülsenförmige Spannelement (109) einen Ringabsatz (132) oder eine Hülsenstirnfläche hat, welcher Ringabsatz (132) oder welche Hülsenstirnfläche die wenigstens eine Führungsbahn (110) trägt.

23. Montage-Einheit (101) nach Anspruch 22, **dadurch gekennzeichnet, dass** der Ringabsatz (132) den Hülseninnenraum des Spannelements (109) in einen Abschnitt reduzierten Querschnitts und einem demgegenüber im Querschnitt erweiterten Abschnitt unterteilt.

24. Montage-Einheit (101) nach einem der vorstehenden Ansprüche, **dadurch gekennzeichnet, dass** der Spannzapfen (107) an seinem dem ersten Klammerteil (104) abgewandten Zapfenende einen Zapfenkopf (131) hat, der (131) den zumindest einen Spannnocken (111) trägt.

25. Montage-Einheit (101) nach Anspruch 24, **dadurch gekennzeichnet, dass** der Zapfenkopf (131) zumindest in einem den Klammerteilen (104, 105) zugewandten Teilbereich seines Außenumfangs durch eine zylindrische Hülle umgrenzt ist.

26. Montage-Einheit (101) nach Anspruch 24 oder 25, **dadurch gekennzeichnet, dass** der Zapfenkopf (131) mit seinen den Klammerteilen (104, 105) zugewandten Teilbereich in den querschnittserweiternden Abschnitt des Hülseninnenraums des Spannelements (109) vorsteht.

## Claims

1. Mounting unit (1, 101) having at least one mounting rail (2, 102) to which (2, 102) at least one holding clip (3, 103) is releasably fixable, said at least one holding clip (3, 103) having two clip parts (4, 5; 104, 105) which (4, 5; 104, 105), by means of a clamping device (6, 106), are braceable against one another in such a way that, in a holding position, the clip parts (4, 5; 104, 105) clamp the mounting rail (2, 102) in between them at least in a sub-region, wherein
the clamping device (6, 106) has a clamping pin (7, 107) which (7, 107) projects from a first clip part (4, 104) and which extends through a passage opening (8, 108) in a second clip part (5, 105), wherein the clamping device (6, 106) has a sleeve-like clamping element (9, 109) for subjecting the second clip part (5, 105) to pressure, which (9, 109), by way of its sleeve interior, is rotatably mounted against or on the clamping pin (7, 107), **characterized in that** the sleeve-like clamping element (9, 109) has at least one guide path (10, 110) with a curved or helical path profile, on which at least one guide path at least one assigned pin tooth (11), or clamping protrusion (111), held on the clamping pin (7, 107) is guided in such a way that a relative rotational movement between the clamping element (9, 109) and the clamping pin (7, 107) is converted into a longitudinal movement of the clamping element (9, 109) on the clamping pin (7, 107) .

2. Mounting unit (1, 101) according to Claim 1, **characterized in that** the at least one assigned pin tooth (11) or clamping protrusion (111) is movable on the guide path (10, 110) assigned thereto between an open position and the clamping or holding position.

3. Mounting unit (1, 101) according to Claim 1 or 2, **characterized in that** the guide travel of the at least one pin tooth (11) or clamping protrusion (111) on the guide path (10, 110) is limited by at least one guide stop (12, 13; 112, 113) and preferably on both sides by in each case one guide stop (12, 13; 112, 113).

4. Mounting unit (1, 101) according to one of Claims 1 to 3, **characterized in that** a recess (14, 114) is provided in the at least one guide path/in at least one of the guide paths (10, 110), into which recess (14, 114) the at least one pin tooth (11) or clamping protrusion (111) latches in the clamping position.

5. Mounting unit (1, 101) according to one of Claims 1 to 4, **characterized in that** the guide path(s) (10, 110) is/are delimited by at least one shoulder, which preferably forms a guide stop (12, 112) in the open position and/or the clamping position.

6. Mounting unit (1, 101) according to one of Claims 1 to 5, **characterized in that** the at least one holding clip (3, 103) has two clip parts (4, 5; 104, 105) which (4, 5; 104, 105) each have at least one clip claw (18, 118), said at least one clip claw engaging behind an adjacent rail longitudinal edge (16, 116) of the rail longitudinal edges (16, 116) delimiting a rail longitudinal side (17, 117), and of which a first clip part (4, 104) engaging behind one rail longitudinal edge (16, 116) bears at least one outwardly formed portion (20, 120), which is delimited by at least one exit slope (19, 119), and a second clip part (5, 105) engaging behind the other rail longitudinal edge (16, 116) bears at least one inwardly formed portion (22, 122) or cutout, which is delimited by at least one mating slope (21, 121), and **in that** the outwardly formed portion (20, 120), on the one hand, and the inwardly formed portion (22, 122) or cutout, on the other hand, of the clip parts (4, 5; 104, 105) abutting against one another are positioned on one another in a form-fitting manner in the clamping or holding position of the holding clip (3, 103).

7. Mounting unit (1, 101) according to Claim 6, **characterized in that** the outwardly formed portion (20, 120) and the inwardly formed portion (22, 122) or cutout each have a square or rhombic cross section.

8. Mounting unit (1, 101) according to either of Claims 6 and 7, **characterized in that** the diagonals of the square or rhombic cross section of the outwardly formed portion (20, 120) and of the inwardly formed portion (22, 122) or cutout are oriented in the rail longitudinal direction or at a right angle to the rail longitudinal direction.

9. Mounting unit (1, 101) according to one of Claims 6 to 8, **characterized in that** the outwardly formed portion (20, 120) is provided on the first clip part (4, 104), which abuts against the at least one rail longitudinal side (17, 117) in the holding position, said outwardly formed portion (20, 120) projecting in the direction facing towards the second clip part (5, 105).

10. Mounting unit (1, 101) according to one of Claims 6 to 9, **characterized in that** the outwardly formed portion (20, 120) provided on the first clip part (4, 104) and the inwardly formed portion (22, 122) provided on the second clip part (5, 105) are each formed as preferably identical shapings of said clip parts (4, 5; 104, 105).

11. Mounting unit (1, 101) according to one of Claims 1 to 10, **characterized in that** the mounting rail (2, 102) has, in the cross section of the rail, a rectangular, preferably square, outer cross-sectional contour.

12. Mounting unit (1, 101) according to one of Claims 1 to 11, **characterized in that** the mounting rail (2, 102) has a holding groove (24, 124) in each of its corner regions, the groove opening of which is delimited by the rail longitudinal edge (16, 116) adjacent to the respective rail corner region.

13. Mounting unit (1, 101) according to Claim 12, **characterized in that** the holding grooves (24, 124) arranged in the rail corner regions are in the form of dovetail grooves.

14. Mounting unit (1, 101) according to one of Claims 1 to 13, **characterized in that** at least one spring element (23, 123) is arranged between the first and second clip parts (4, 5; 104, 105) of the at least one holding clip (3, 103), which at least one spring element (23, 123) pushes the clip parts (4, 5; 104, 105) apart in the unloaded state of the clamping device (6, 106).

15. Mounting unit (1) according to Claim 14, **characterized in that** the at least one spring element (23) is in the form of a spring clip, which is preferably connected to the first clip part (4).

16. Mounting unit (1) according to Claim 14 or 15, **characterized in that** the at least one spring element (23) acts resiliently on the second clip part (5) at its transverse edge region which faces away from the at least one clip claw (18).

17. Mounting unit (101) according to Claim 14, **characterized in that** the at least one spring element (123) is in the form of a multi-wave spring washer.

18. Mounting unit (101) according to Claim 17, **characterized in that** the at least one spring washer (123) has a washer opening through which the clamping pin (107) extends and/or which is arranged between the first and second clip parts (104, 105).

19. Mounting unit (1) according to one of Claims 1 to 18, **characterized in that** the at least one pin tooth (11) projects preferably radially from the pin circumference of the clamping pin (7).

20. Mounting unit (1) according to one of Claims 1 to 19, **characterized in that**, on the sleeve inner circumference of the clamping element (9), provision is made of at least one groove (15) opening out into the guide path (10) for threading the at least one pin tooth (11) into the guide path (10).

21. Mounting unit (101) according to one of Claims 1 to 18, **characterized in that** the at least one clamping protrusion (111) extends on the clamping pin (107) in an axial direction in relation to the assigned guide path (110).

22. Mounting unit (101) according to one of Claims 1 to 21, **characterized in that** the sleeve-like clamping element (109) has a ring shoulder (132) or a sleeve end face, which ring shoulder (132) or which sleeve end face bears the at least one guide path (110).

23. Mounting unit (101) according to Claim 22, **characterized in that** the ring shoulder (132) subdivides the sleeve interior of the clamping element (109) into a section of reduced cross section and a section which, by contrast, is of enlarged cross section.

24. Mounting unit (101) according to one of the preceding claims, **characterized in that**, at its pin end facing away from the first clip part (104), the clamping pin (107) has a pin head (131) which (131) bears the at least one clamping protrusion (111).

25. Mounting unit (101) according to Claim 24, **characterized in that**, at least in a sub-region of its outer circumference facing towards the clip parts (104, 105), the pin head (131) is bordered by a cylindrical shell.

26. Mounting unit (101) according to Claim 24 or 25, **characterized in that** the pin head (131) projects by way of its sub-region facing towards the clip parts (104, 105) into the cross-section-enlarging section of the sleeve interior of the clamping element (109).

## Revendications

1. Unité de montage (1, 101) pourvue d'au moins un rail de montage (2, 102) sur lequel (2, 102) peut être fixé de manière amovible au moins un clip de retenue (3, 103), lequel (3, 103) possède deux pièces de clip (4, 5 ; 104, 105), lesquelles (4, 5 ; 104, 105) peuvent être tendues entre elles au moyen d'un dispositif de serrage (6, 106) de telle sorte que ces pièces de clip (4, 5 ; 104, 105) serrent entre elles dans une position de retenue le rail de montage (2, 102) au moins sur un segment, le dispositif de serrage (6, 106) étant doté d'un tenon de serrage (7, 107), lequel (7, 107) fait saillie sur une première pièce de clip (4, 104) et traverse une ouverture de passage (8, 108) sur une deuxième pièce de clip (5, 105), et le dispositif de serrage (6, 106) possédant un élément de serrage en forme de douille (9, 109) pour appliquer une pression sur la deuxième pièce de clip (5, 105), lequel (9, 109) est monté de façon rotative avec son espace intérieur de douille contre ou sur le tenon de serrage (7, 107), **caractérisée en ce que** l'élément de serrage en forme de douille (9, 109) possède au moins une voie de guidage (10, 110) dotée d'une trajectoire en forme de courbe ou de spirale sur laquelle un panneton (11) ou une came de serrage (111) associé et maintenu sur le tenon de serrage (7, 107) est guidé de telle sorte qu'un mouvement de rotation relatif entre l'élément de serrage (9, 109) et le tenon se serrage (7, 107) est converti en un mouvement longitudinal de l'élément de serrage (9, 109) sur le tenon de serrage (7, 107).

2. Unité de montage (1, 101) selon la revendication 1, **caractérisée en ce que** l'au moins un panneton (11) ou came de serrage (111) peut se déplacer sur la voie de guidage (10, 110) qui lui est associée entre une position d'ouverture et une position de serrage ou de retenue.

3. Unité de montage (1, 101) selon la revendication 1 ou 2, **caractérisée en ce que** le chemin de guidage de l'au moins un panneton (11) ou came de serrage (111) sur la voie de guidage (10, 110) est délimité par au moins une butée de guidage (12, 13 ; 112, 113) et de préférence par une butée de guidage (12, 13 ; 112, 113) sur chacun des deux côtés.

4. Unité de montage (1, 101) selon une des revendications 1 à 3, **caractérisée en ce que** dans l'au moins une voie de guidage / dans au moins une des voies de guidage (10, 110) est prévue une encoche (14, 114) dans laquelle (14, 114) l'au moins un panneton (11) ou came de serrage (111) s'emboite en position de serrage.

5. Unité de montage (1, 101) selon une des revendications 1 à 4, **caractérisée en ce que** la/les voie(s) de guidage (10, 110) est/sont délimitée(s) par au moins un épaulement qui forme de préférence une butée de guidage (12, 112) dans la position d'ouverture et/ou la position de serrage.

6. Unité de montage (1, 101) selon une des revendications 1 à 5, **caractérisée en ce que** l'au moins un clip de retenue (3, 103) possède deux pièces de clip (4, 5 ; 104, 105), lesquelles (4, 5 ; 104, 105) comportent chacune au moins une griffe de clip (18, 118) s'engageant derrière un bord longitudinal de rail (16, 116) adjacent des bords longitudinaux de rail (16, 116) délimitant un côté longitudinal de rail (17, 117) et parmi lesquelles une première pièce de clip (4, 104) s'engageant derrière un bord longitudinal de rail (16, 116) porte au moins une formation en relief (20, 120) délimitée par au moins un plan incliné (19, 119) et une deuxième pièce de clip (5, 105) s'engageant derrière l'autre bord longitudinal de rail (16, 116) porte au moins une formation en creux (22, 122) ou cavité délimitée par au moins un plan incliné homologue (21, 121), et que la formation en relief (20, 120) d'une part et la formation en creux (22, 122) ou cavité d'autre part des pièces de clip (4, 5 ; 104, 105) appliquées l'une contre l'autre sont emboitées l'une sur l'autre lorsque le clip de retenue (3, 103) est en position de serrage ou de retenue.

7. Unité de montage (1, 101) selon la revendication 6, **caractérisée en ce que** la formation en relief (20, 120) et la formation en creux (22, 122) ou cavité présentent chacune une section transversale carrée ou en forme de losange.

8. Unité de montage (1, 101) selon une des revendications 6 à 7, **caractérisée en ce que** les diagonales de la section transversale carrée ou en forme de losange de la formation en relief (20, 120) et de la formation en creux (22, 122) ou cavité sont orientées dans la direction longitudinale du rail ou perpendiculairement à la direction perpendiculaire du rail.

9. Unité de montage (1, 101) selon une des revendications 6 à 8, **caractérisée en ce que** sur la première pièce de clip (4, 104) reposant en position de retenue contre l'au moins un côté longitudinal de rail (117) est prévue la formation en relief (20, 120), laquelle (20, 120) fait saillie en direction de la deuxième pièce de clip (5, 105).

10. Unité de montage (1, 101) selon une des revendications 6 à 9, **caractérisée en ce que** la formation en relief (20, 120) prévue sur la première pièce de clip (4, 104) et la formation en creux (22, 122) prévue sur la deuxième pièce de clip (5, 105) sont configurées chacune comme des éléments de préférence de forme identique de ces pièces de clip (4, 5 ; 104, 105).

11. Unité de montage (1, 101) selon une des revendications 1 à 10, **caractérisée en ce que** le rail de montage (2, 102) présente dans la section transversale de rail un contour de section extérieur rectangulaire et de préférence carré.

12. Unité de montage (1, 101) selon une des revendications 1 à 11, **caractérisée en ce que** le rail de montage (2, 102) présente dans chacune de ses zones d'angle une rainure de support (24, 124) dont l'ouverture de rainure est limitée par les bords longitudinaux de rail (16, 116) contigus à la zone d'angle de rail respective.

13. Unité de montage (1, 101) selon la revendication 12, **caractérisée en ce que** les rainures de support (24, 124) disposées dans les zones d'angle de rail sont configurées comme des rainures en queue d'aronde.

14. Unité de montage (1, 101) selon une des revendications 1 à 13, **caractérisée en ce qu'**entre les première et deuxième pièces de clip (4, 5 ; 104, 105) de l'au moins un clip de retenue (3, 103) est agencé au moins un élément de ressort (23, 123) qui écarte les pièces de clip (4, 5 ; 104, 105) lorsque le dispositif de serrage (6, 106) est détendu.

15. Unité de montage (1) selon la revendication 14, **caractérisée en ce que** l'au moins un élément de ressort (23) est configuré comme un étrier élastique qui est de préférence relié à la première pièce de clip (4).

16. Unité de montage (1) selon la revendication 14 ou 15, **caractérisée en ce que** l'au moins un élément de ressort (23) appuie de façon élastique sur la deuxième pièce de clip (5) au niveau de sa zone de bordure transversale opposée à l'au moins une griffe de clip (18).

17. Unité de montage (101) selon la revendication 14, **caractérisée en ce que** l'au moins un élément de ressort (123) est configuré comme une rondelle élastique dotée de plusieurs ondulations.

18. Unité de montage (101) selon la revendication 17, **caractérisée en ce que** l'au moins une rondelle élastique (123) a un orifice de rondelle que traverse le tenon de serrage (107) et/ou qui est agencé entre la première et la deuxième pièce de clip (104, 105).

19. Unité de montage (101) selon une des revendications 1 à 18, **caractérisée en ce que** l'au moins un panneton (11) fait saillie de préférence radialement sur la périphérie de tenon du tenon de serrage (7).

20. Unité de montage (101) selon une des revendications 1 à 19, **caractérisée en ce que** sur la périphérie intérieure de douille de l'élément de serrage (9) est prévue au moins une rainure (15) débouchant dans la voie de guidage (10) pour enfiler l'au moins un panneton (11) dans la voie de guidage (10).

21. Unité de montage (101) selon une des revendications 1 à 18, **caractérisée en ce que** l'au moins une came de serrage (111) s'étend sur le tenon de serrage (107) dans la direction axiale vers la voie de guidage (110) associée.

22. Unité de montage (101) selon une des revendications 1 à 21, **caractérisée en ce que** l'élément de serrage en forme de douille (109) possède un épaulement annulaire (132) ou une face frontale de douille, lequel épaulement annulaire (132) ou laquelle face frontale de douille porte l'au moins une voie de guidage (110).

23. Unité de montage (101) selon la revendication 22, **caractérisée en ce que** l'épaulement annulaire (132) divise l'espace intérieur de douille de l'élément de serrage (109) en un segment de section transversale réduite et un segment doté au contraire d'une section transversale élargie.

24. Unité de montage (101) selon une des revendications précédentes, **caractérisée en ce que** le tenon de serrage (107) possède à son extrémité de tenon opposée à la première pièce de clip (104) une tête de tenon (131), laquelle (131) porte l'au moins une came de serrage (111).

25. Unité de montage (101) selon la revendication 24, **caractérisée en ce que** la tête de tenon (131) est entourée par une douille cylindrique au moins dans une zone partielle de sa périphérie extérieure orientée vers les pièces de clip (104, 105).

26. Unité de montage (101) selon la revendication 24 ou 25, **caractérisée en ce que** la tête de tenon (131) avec sa zone partielle de sa périphérie extérieure orientée vers les pièces de clip (104, 105) fait saillie dans le segment de section élargie de l'espace intérieur de douille de l'élément de serrage (109).
